# EUROPÄISCHE PATENTSCHRIFT

(11) **EP 0 705 524 B1**
(45) Veröffentlichungstag und Bekanntmachung des Hinweises auf die Patenterteilung: **16.12.1998**
(21) Anmeldenummer: 94920951.4
(22) Anmeldetag: 17.06.1994
(51) Int. Cl.: H04Q 7/20, G01S 5/04

(54) **VERFAHREN ZUR ORTUNG VON MOBILSTATIONEN IN EINEM ZELLULAR AUFGEBAUTEN MOBILFUNKNETZ SOWIE MOBILFUNKNETZ ZUR DURCHFÜHRUNG DES VERFAHRENS**
PROCESS FOR LOCATING MOBILE STATIONS IN A CELLULAR MOBILE RADIO NETWORK AND MOBILE RADIO NETWORK FOR CARRYING OUT THE PROCESS
PROCEDE DE LOCALISATION DE STATIONS MOBILES DANS UN RESEAU RADIOTELEPHONIQUE MOBILE CELLULAIRE ET RESEAU RADIOTELEPHONIQUE MOBILE POUR LA MISE EN OEUVRE DU PROCEDE

(30) Priorität: 26.06.1993 DE 4321418
(43) Veröffentlichungstag der Anmeldung: 10.04.1996
(73) Patentinhaber: Daimler-Benz Aerospace Aktiengesellschaft, 81663 München (DE)
(72) Erfinder: EIZENHÖFER, Alfons, D-90518 Altdorf (DE)
(74) Vertreter: Fröhling, Werner Otto, Dr.
(86) Internationale Anmeldenummer: EP9401977
(87) Internationale Veröffentlichungsnummer: WO9501066

(56) Entgegenhaltungen:
- EP-A- 0 335 558
- INTERNATIONAL SWITCHING SYMPOSIUM 1992."DIVERSIFICATION AND INTEGRATION OF NETWORKS AND SWITCHING TECHNOLOGIES TOWARDS THE 21ST CENTURY", Bd.1, 25. Oktober 1992, YOKOHAMA, JP Seiten 307 - 311, XP000337664 BRODY ET AL. 'SUBSCRIBER TRACKING AND LOCATING IN PERSONAL COMMUNICATIONS NETWORKS'
- IEEE TRANSACTIONS ON VEHICULAR TECHNOLOGY, Bd.41, Nr.1, Februar 1992, NEW YORK US Seiten 63 - 67, XP000297042 SAKAGAMI ET AL. 'Vehicle Position Estimates by Multibeam Antennas in Multipath Environments'
- NAVIGATION. REVU TECHNIQUE DE NAVIGATION MARITIME, AERIENNE, SPATIALE ET TERRESTRE, Bd.39, Nr.153, Januar 1991, PARIS, FR Seiten 13 - 21 WICKMAN ET AL. 'LOCALISTION ASSOCIEE AU SYSTEME GSM'

## Beschreibung

Die Erfindung betrifft ein Verfahren zur Ortung von Mobilstationen in einem zellular aufgebauten Mobilfunknetz gemäß Oberbegriff des Patentanspruchs 1 sowie ein Mobilfunknetz zum Durchführen des Verfahrens gemäß Oberbegriff des Patentanspruchs 12. Ein solches Verfahren bzw. ein solches Mobilfunknetz ist bereits aus H. Hamalek, K. Kammerlander: "Grundlagen und Praxis der Funkzellengestaltung mit relativer Entfernungsmessung im Netz C der DBP", in: NTG-Fachberichte Bewegliche Funkdienste, Band 90, S. 157-164 bekannt.

Die Ortsbestimmung von Mobilstationen in Funknetzen ist für eine Vielzahl von Anwendungen wünschenswert. Beispiele hierfür sind Notrufe oder Sicherheits- und Gefahrenguttransporte, aber auch die Überwachung von Fahrzeugflotten z.B. von Speditionen oder Fahrzeugvermietern.

Grundsätzlich kann man bei den Verfahren zur Ortung von Mobilstationen in einem zellular aufgebauten Mobilfunknetz zwischen teilnehmeraktiven und teilnehmerpassiven Verfahren unterscheiden, wobei die teilnehmerpassiven Verfahren wiederum in zwei Klassen unterteilt werden können.

Bei den teilnehmeraktiven Verfahren stellt der Teilnehmer seinen Standort selbst fest. Dazu können z.B. Funknavigationsmethoden (GPS(Global Positioning System), Decca), Kompaßmethoden und Wegeaufnehmer ("dead reckoning") oder andere Hilfsmittel verwendet werden. Der Teilnehmer bzw. sein Gerät, d.h. die Mobilstation meldet den aktuellen Aufenthaltsort über das Mobilfunknetz zu einer Zentralstation. Dies geschieht entweder automatisch durch die Mobilstation oder nach Abfrage ("polling") durch die Zentralstation. Bei den teilnehmerpassiven Verfahren mit Mobilstations-Unterstützung meldet sich der Teilnehmer bzw. die Mobilstation im Netz und verlangt explizit oder implizit (z.B. beim Notruf) eine Bestimmung des Standorts der Mobilstation durch das Mobilfunknetz. Das Mobilfunknetz führt dann die Ortsbestimmung durch. Durch das Melden des Teilnehmers wird die Ortsbestimmung erheblich erleichtert, denn die Triggerung für die Messung und das Suchen des Teilnehmers im Netz entfällt. Bei den teilnehmerpassiven Verfahren ohne Mobilstations-Unterstützung stellt das Mobilfunknetz zunächst den ungefähren Standort des Teilnehmers (z.B. die Funkzelle) fest, und führt dann eine genaue Ortsbestimmung ohne Zutun des Teilnehmers durch. Dabei ist es möglich, daß der Teilnehmer den Vorgang der Ortsbestimmung nicht wahrnimmt. Die teilnehmerpassiven Verfahren ohne Mobilstations-Unterstützung sind die technisch aufwendigsten Verfahren. Wenn ein teilnehmerpassives Verfahren ohne Mobilstations-Unterstützung realisiert ist, läßt sich daraus ein teilnehmerpassives Verfahren mit Mobilstations-Unterstützung leicht ableiten.

In dem Artikel von G. Brody, J. Parker und J. Wassermann: "Subcriber Tracking and Locating in Personal Communications Networks"; in Proceedings of the XIV. International Switching Symposium (Yokohama, Japan, October 25-30, 1992) Vol. 1, Seiten 307-311 ist ein zellular aufgebautes Mobilfunknetz beschrieben, bei dem zentrale Heimatregister vorgesehen sind, in denen die wesentlichen Daten der einzelnen Mobilstationen erfaßt sind, sowie Besucherregister, die Informationen über diejenigen Mobilstationen enthalten, die sich momentan in den ihnen zugeordneten Teilgebieten (Location Areas) befinden, die sich in der Regel aus mehreren Funkzellen zusammensetzen. Zur Abwicklung des Funkverkehrs mit den gesuchten Mobilstationen sind regionale Schaltzentren vorgesehen, die anhand der zuletzt bekannten Standortdaten der jeweiligen Mobilstation das funktechnisch jeweils zuständige Teilgebiet bestimmen und aktivieren. Bei diesem System wird der Standort der Mobilstationen allerdings nur bis zur Teilgebietsebene bestimmt, eine genauere Ortsbestimmung innerhalb des ermittelten Teilgebiets wird dagegen nicht durchgeführt. Bei einer statischen Zuweisung der einzelnen Funkzellen zu den einzelnen Teilgebieten kann es vor allem bei Bewegung der aktiven Mobilstation im Grenzbereich benachbarter Teilgebiete zu einem häufigen Umschalten zwischen den einzelnen Teilgebieten kommen, je nachdem wie oft die aktive Mobilstation die Grenze zwischen den benachbarten Teilgebieten überschreitet. Um diese Umschaltungen auf ein Minimum beschränken zu können, ist in einer Weiterbildung dieses Systems eine dynamische Zuordnung der einzelnen Funkzellen zu den Teilgebieten vorgesehen. Aber auch bei dieser Abwandlung des Systems wird der Standort der Mobilstationen nur bis zur Ebene der Teilgebiete festgestellt, zusätzlich wird lediglich beobachtet, ob die aktivierten Mobilstationen das jeweils aktivierte Teilgebiet verlassen oder nicht.

Wechselt die überwachte Mobilstation nur kurzzeitig in das benachbarte Teilgebiet, wird bei dieser Systemvariante eine entsprechende Umschaltung des Neztes nicht durchgeführt. Erst wenn sicher ist, daß die Mobilstation nicht in das ursprüngliche Teilgebiet zurückkehrt, wird die Umschaltung/Aktivierung des neuen Teilgebiets durch die zuständige Schaltzentrale vorgenommen.

Für synchrone öffentliche Mobilfunknetze (PLMN = Public Land Mobile Network) wurden bereits teilnehmerpassive Verfahren zur Ortsbestimmung von Mobilstationen vorgeschlagen.

So ist beispielsweise in dem eingangs genannten Artikel von H. Hamalek und K. Kammerlander ein Ortungsverfahren für das (auf analoger Basis arbeitende) C-Netz der Deutschen Bundespost beschrieben, nach dem die Mobilstation durch Messung des Zeitversatzes zwischen den Empfangssignalen von zwei ortsfesten Basisstationen die relative Entfernung bestimmen kann. Sind mehr als zwei Basisstationen an dem Meßvorgang beteiligt, und kennt man die Orte der Basisstationen, so kann auch der Ort der zu ortenden Mobilstation bestimmt werden. Dieses Verfahren läßt sich auch auf andere synchrone Funksysteme, z.B. auf das (digital arbeitende) europäische GSM(Groupe-Speciale-Mobile)-Netz bzw. das diesem Netz angehörende deutsche D-Netz, übertragen, sofern in einem solchen Netz der Rahmenversatz zwischen den einzelnen Basisstationen bekannt ist.

Aus der EP 0 335 558 A2 ist ferner ein Ortungsverfahren für Mobilfunknetze bekannt, bei dem durch Laufzeitmessungen von mehreren Basisstationen aus der Ort der zu ortenden Mobilstation bestimmt wird, indem eine Basisstation eine Meldung aussendet und die zu ortende Mobilstationen nach dem Empfang der Meldung eine Antwort aussendet. Ausgewählte Basisstationen messen die Verzögerungszeit bis zum Empfang dieser Antwort und ermitteln daraus die Signallaufzeit.

Dieses Verfahren ist ungenau, denn die Reaktionszeit der Mobilstation, die herstellerabhängig ist, geht erheblich in die Laufzeit mit ein. Das Verfahren ist im Grunde für analoge arbeitende Mobilfunksysteme konzipiert, denn in diesen Systemen stehen keine anderen Möglichkeiten als die beschriebene für die Laufzeitmessung zur Verfügung (mit Ausnahme des erwähnten C-Netzes). Darüber hinaus ist die Genauigkeit der Laufzeitmessung in den analogen Schmalbandsystemen durch die Kanalbreite von typisch 25 kHz sehr eingeschränkt.

Im GSM-Netz, das eine Kanalbreite von 200 kHz hat, ist es möglich, die Signalaufzeit mit der Genauigkeit von etwa 1 Bit, das entspricht 3,7 Mikrosekunden, zu messen. Dies ermöglicht eine weit höhere Genauigkeit der Standortbestimmung als in analogen Systemen. Die dazu nötige Messung ist im System bereits eingebaut, jedoch nicht primär zum Zweck der Entfernungsbestimmungen, sondern als Laufzeitregelung für den Zeitmultiplex. Ein Überblick über das GSM-Netz und seine Eigenschaften gibt die Artikelserie von H. Ochsner: "Das zukünftige paneuropäische digitale Mobiltelefonsystem", Teil 1: "GSM-Empfehlungen und Dienste" (Bulletin SEV/VSE 79(1988)11, S. 603-608), Teil 2: "Die Funkstrecke" (Bulletin ASE/UCS 79(1988)15, S. 937-942, Teil 3: "Digitalisierung der Sprache und Netzwerkaspekte" (Bulletin ASE/UCS 79(1988)21, S. 1318-1324).

Es gibt jedoch eine Reihe von prinzipiellen Nachteilen der Standortbestimmung durch Laufzeitmessung von mehreren Basisstationen aus. Als erstes ist - wie bereits erwähnt - die mangelnde Genauigkeit zu nennen, die durch herstellerabhängige Reaktionszeiten der Mobilstationen verursacht wird. Dies ist bei dem in EP 0 335 558 A2 vorgeschlagenen Verfahren besonders gravierend, da dort die Reaktionszeit auf Meldungsebene gemessen wird und dadurch von der Implementierung der Hard- und Software abhängig ist. Im GSM-Netz wird dagegen die Reaktionszeit auf der physikalischen Ebene gemessen und ist daher erheblich genauer.

Die Laufzeitmessungen werden mit dem demodulierten Signal durchgeführt. Folglich wird die praktisch erzielbare Genauigkeit unter dem Genauigkeitswert liegen, der theoretisch durch die Übertragungsbandbreite gegeben ist.

Zusätzlich zu diesen Effekten kommt die Ungenauigkeit der Laufzeitmessung durch Umwege (Mehrwegeausbreitung) dazu. Die gemessenen Entfernungen sind dadurch im Mittel größer als die tatsächlichen.

Als größter Nachteil ist jedoch zu nennen, daß die Laufzeitmessungen von mindestens zwei Basisstationen aus durchgeführt werden muß. Dazu ist das Weiterreichen der Verbindung ("Handover") zwischen den an der Laufzeitmessung beteiligten Stationen nötig. Das Weiterreichen einer Verbindung zu einer Nachbarbasisstation ist jedoch nur in Gebieten möglich, in denen sich die Funkzellen überlappen. Aus Feldstärkegründen kann eine Standortbestimmung in Gebieten ohne Überlappung dagegen nicht durchgeführt werden.

Ein weiterer Nachteil des in C-Netz angewendeten Verfahren ist die erforderliche Synchronisation der Zellen untereinander, die nicht in jedem Mobilfunksystem gegeben ist.

In dem Artikel von S. Sakagami, S. Aoyama, K. Kuboi, S. Shirota und A. Akeyama: "Vehicle Position Estimates by Multibeam Antennas in Multipath Environments"; in: IEEE Transactions on Vehicular Technology, Vol. 41, No. 1, February 1992, Seiten 63-67 ist ein Verfahren zur Standortbestimmung von Mobilstationen in einem zellular aufgebauten Mobulfunknetz beschrieben, bei dem die Basisstationen des Netzes mit Antennen ausgerüstet sind, die das zu überwachende Gebiet azimutal mit einer Mehrzahl von feststehenden Antennen-Richt-Strahlungsdiagrammen abdecken ("Multibeam Antennas").

Bei diesem Verfahren sendet die Mobilstation ein CW-Signal aus, das von den einzelnen Strahlungsdiagrammen der Antennen der Basisstationen mit unterschiedlicher Feldstärke empfangen wird. Mit Hilfe nachgeschalteter Feldstärkemeßeinrichtungen wird in den einzelnen Basisstationen dann festgestellt, welches der einzelnen Strahlungsdiagramme einer Antenne die jeweils höchste Feldstärke des Empfangssignals aufweist. Aus dem Schnittpunkt der (feststehenden) Hauptstrahlrichtungen der so ermittelten Antennen-Strahlungsdiagramme der einzelnen Basisstationen mit der jeweils höchsten Empfangsfeldstärke wird anschließend der Ort der Mobilstation ermittelt.

Die Aufgabe der Erfindung besteht darin, zum einen ein Verfahren der eingangs genannten Art zu schaffen, das eine möglichst genaue Standortbestimmung von Mobilstationen innerhalb eines zellular aufgebauten Mobilfunknetz ermöglicht, und zum anderen ein Mobilfunknetz zum Durchführen eines solchen Verfahrens anzugeben, das mit möglichst wenig Zusatzaufwand realisiert werden kann.

Die erfindungsgemäße Lösung der Aufgabe wird in bezug auf das zu schaffende Verfahren durch die kennzeichnenden Merkmale des Patentanspruchs 1 wiedergegeben und in bezug auf das zu schaffende Mobilfunknetz durch die kennzeichnenden Merkmale des Patentanspruchs 12. Die übrigen Ansprüche enthalten vorteilhafte Aus- und Weiterbildungen des erfindungsgemäßen Verfahrens (Ansprüche 2 bis 11) und des erfindungsgemäßen Mobilfunknetzes (Ansprüche 13 bis 15) sowie eine bevorzugte Anwendung der Erfindung (Anspruch 16).

Die erfindungsgemäße Lösung in bezug auf das zu schaffende Verfahren sieht vor, daß die Informationen der Speicher-Einrichtung zur groben Ortsbestimmung der zu ortenden Mobilstation verwendet werden und daß zur genaueren Ortsbestimmung mindestens eine Peilung durchgeführt wird.

Der wesentliche Vorteil dieser Lösung besteht darin, daß mit der Funkpeilung der zu ortenden Mobilstation eine sehr genaue Ortsbestimmung innerhalb der Zelle möglich ist, in der sich die zu ortende Mobilstation zum Zeitpunkt der Ortung gerade befindet.

Die erfindungsgemäße Lösung in bezug auf das zu schaffende Mobilfunknetz sieht vor, daß die einzelnen Basisstationen oder zumindest ein Teil dieser Basisstationen oder Gruppen von Basisstationen jeweils mit mindestens einem ihnen zugeordneten Peiler in Verbindung stehen und daß das Mobilfunknetz mindestens eine mit dem (den) Peiler(n) in Verbindung stehende Ortungszentrale aufweist.

Der wesentliche Vorteil dieser Lösung besteht darin, daß im Vergleich zu herkömmlichen zellular aufgebauten Mobilfunknetzen ein nur geringer Zusatzaufwand erforderlich ist für das erfindungsgemäße Mobilfunknetz. Neben der Bereitstellung der Peiler und der mindestens einen Ortungszentrale muß nur noch für eine (überwiegend softwaremäßige) Anbindung dieser Komponenten an das Mobilfunknetz gesorgt werden, das im übrigen Aufbau im wesentlichen gleich dem herkömmlicher Mobilfunknetze sein kann.

Besonders vorteilhaft läßt sich die Erfindung in Mobilfunknetzen nach dem ETSI-GSM-Standard (vgl. hierzu die bereits zitierte Artikelserie von H. Ochsner über das GSM-Netz) einsetzen.

Im folgenden sei die Erfindung anhand von Figuren näher erläutert. Es zeigen:
- FIG. 1-3: drei vorteilhafte Ausführungsbeispiele des erfindungsgemäßen Mobilfunknetzes (im Ausschnitt), die nach dem ETSI-GSM-Standard konzipiert worden sind;
- FIG. 4: ein Detail der Ausführungsbeispiele gemäß FIG. 2 oder FIG. 3 mit der zu ortenden Mobilstation, der zuständigen Basisstation und dem zugeordneten Peiler;
- FIG. 5-10: Beispiele von Verfahrensabläufen zur Ortung einer Mobilstation in einem Mobilfunknetz gemäß FIG. 1, 2 oder 3 mit unterschiedlichem Genauigkeitsgrad im Ortungsergebnis.

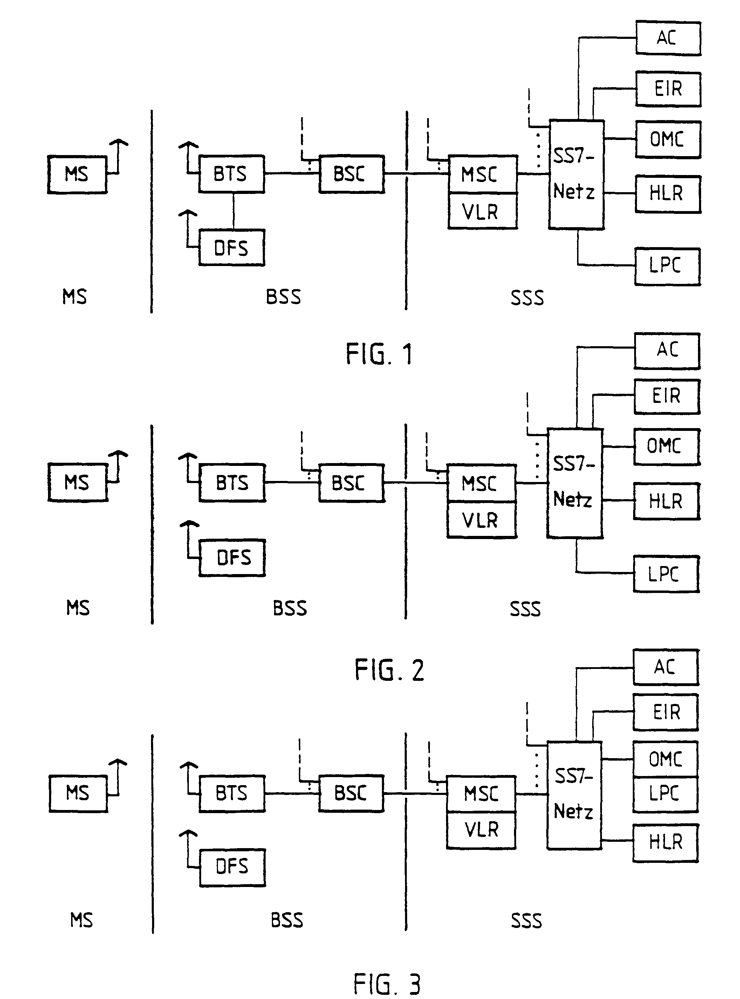

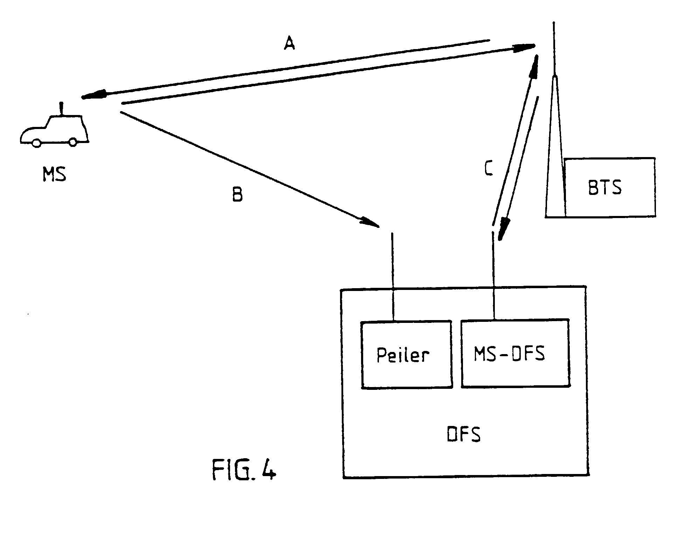

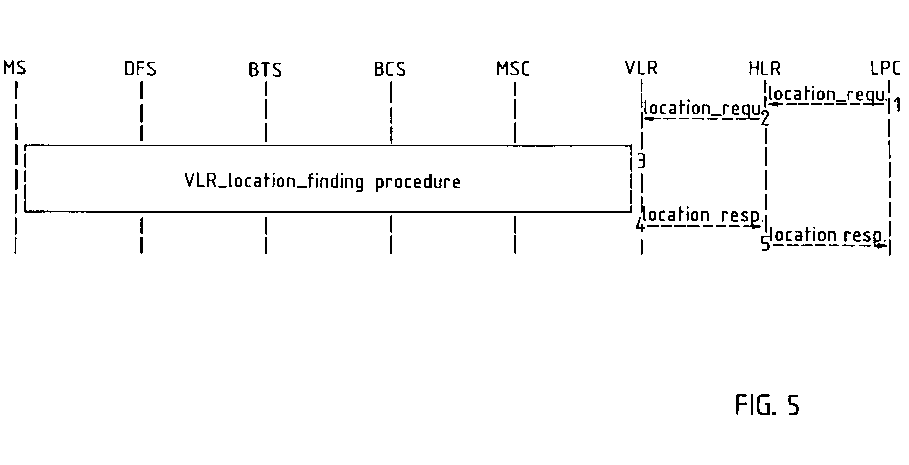

Die in den Figuren 1 bis 3 dargestellten Ausführungsbeispielen des erfindungsgemäßen Mobilfunknetzes gehen in ihrer Netzarchitektur von der an sich bekannten Netz-Architektur nach dem ETSI-GSM-Standard aus und unterscheiden sich von dieser und untereinander lediglich in der Anordnung der erfindungsgemäß zusätzlich an das Netz anzuschließenden Peiler und Ortungszentrale(n). Da die in den Figuren 1 bis 3 gezeigten Ausführungsbeispiele wie auch das Detail in FIG. 4 und die in den Figuren 5 bis 10 gezeigten Verfahrensabläufe zur Ortung von Mobilstationen in solchen Netzen eng an den ETSI-GSM-Standard angelehnt sind, wurde in sämtlichen Figuren einheitlich die in diesem Standard gebräuchlichen Abkürzungen und (englischsprachigen) Begriffe für bestimmte Baugruppen und Verfahrensabläufe verwendet, die im folgenden näher erläutert werden.

Die in den Figuren gezeigten Mobilfunknetze bestehen aus drei großen Komponenten, nämlich den Mobilstationen MS (von denen (beispielhaft) nur eine gezeigt ist), den Base Station Subsystemen BSS (von denen (beispielhaft) ebenfalls nur eines (und auch nur unvollständig) gezeigt ist) sowie den Switching Subsystemen SSS (von denen (beispielhaft) ebenfalls nur eines (und auch nur unvollständig) gezeigt ist und das mit weiteren (nicht gezeigten) SSS verbunden sein kann).

Das BSS setzt sich zusammen aus den Komponenten BTS, BSC, TCE, DFS und (nicht gezeigt) OMC-BSS, und das SSS aus den Komponenten MSC, (nicht gezeigt) GMSC, HLR, VLR, EIR, AC, LPC und OMC-SSS. Einige dieser Komponenten können physikalisch in einer Einheit zusammengefaßt werden.

Die Mobilstation MS ist z.B. ein in einem Auto eingebautes Gerät ("line fit"), ein transportables Gerät ("portable") oder ein Handtelefon ("handheld"). Zusatzgeräte können über eine R-Schnittstelle oder eine ISDN Sonder-Schnittstelle angeschlossen werden.

Die Basisstation BTS ("Base Tranceiver Station") bedient die Funkschnittstelle einer Funkzelle. Sie enthält alle Funkteile einschließlich Antennen und Antennenkopplern. Dementsprechend sind Funktionen wie z.B. Modulation, Codierung, Frequenzsprungverfahren, Zeitmultiplex, Verwaltung der Systemzeit, Synchronisation zwischen Zellen usw. in der BTS realisiert. Für Meldungen der höheren Protokollschichten ist die BTS transparent.

Die Steuerung der Basisstation BSC ("Base Station Controller") wurde aus zwei Gründen geschaffen, um die weiter unten erläuterte MSC von Betriebs- und Wartungsaufgaben (O&M - Organisation & Management) und auch von Signalisierungsaufgaben zu entlasten. Die BSC ermöglicht aber auch ein schnelles Weiterreichen ("hand over") in Netzen mit Kleinzellen. Die BSC bedient mehrere Basisstationen BTS - die genaue Zahl ist vom Hersteller und von der Netzplanung abhängig - und kann zwischen den angeschlossenen Zellen Gespräche eigenständig weiterschalten ("BSS internal hand-off").

Die Transcodierungseinheit TCE ist vorgesehen, um Leitungskapazität zu sparen, indem Sprache und Daten zwischen BTS und TCE mit 16 kb/s übertragen werden. Jeweils vier dieser Kanäle werden durch Zeitmultiplex in einem Kanal von 64 kb/s zusammengefaßt. Die Transcodierungseinheit TCE steht meist am Ort der MSCs und codiert von 16 kb/s auf 64 kb/s und umgekehrt. Im Fall von Sprache geschieht diese Umwandlung durch Sprachcodierung bzw. -decodierung, bei Datenübertragung durch Ratenanpassung.

Die Mobilfunkvermittlungsstelle MSC ("Mobile Services Switching Centre") ist die mobilfunk-spezifische Vermittlungsstelle, wie sie von den analogen Mobilfunknetzen bekannt ist. Hier sind alle höheren Dienste und Zusatzdienste realisiert. Der Funktionsumfang ist im GSM-System durch die Vielzahl der Dienste und Sicherheitsfunktionen im Vergleich hierzu erheblich höher.

Die Heimatdatei HLR ("Home Location Register") und die Besucherdatei VLR ("Visitor Location Register) sind Datenbanken, die die Bewegung der Teilnehmer bzw. Mobilstationen MS registrieren ("mobilty management") und es ermöglichen, Verbindungen zum mobilen Teilnehmer zu schalten. Aus Gründen der Effizienz gibt es zwei Arten von Datenbanken, die hierarchisch geordnet sind. In der Heimatdatei HLR werden vorwiegend statische und sich nur langsam ändernde Daten gehalten. Dort sind die Daten des Teilnehmers (z.B. Dienstberechtigungen) fest gespeichert. Zu welcher Heimatdatei HLR ein Teilnehmer gehört, ist aus seiner Nummer eindeutig ablesbar.

Die Daten in der Besucherdatei VLR sind überwiegend dynamisch und ändern sich durch die Teilnehmerbewegung. Taucht ein neuer Teilnehmer im Bereich der Besucherdatei VLR auf, dann werden die nötigen Daten aus der zuständigen Heimatdatei HLR kopiert. Sie werden wieder gelöscht, sobald der Teilnehmer den VLR-Bereich verläßt.

Das Autentifizierungsdatei AC ("Authentication Centre") ist der Heimatdatei HLR beigeordnet und verwaltet alle sicherheitsrelevanten Daten und Verschlüsselungsalgorithmen. Es ist daher besonders geschützt.

Die Datenbank für Gerätenummern EIR ("Equipment Identity Register") verwaltet die Nummern gestohlener Geräte. Dadurch kann das Benutzen gestohlener Geräte verhindert werden. Gleichzeitig kann die Teilnehmernummer eines illegalen Benutzers festgestellt werden.

Das Betriebs- und Wartungszentrum OMC ("Operation and Maintenance Centre") administriert im allgemeinen alle Einheiten eines GSM-Netzes, außer den Mobilstationen MS. Da diese Einheiten von verschiedenen Herstellern geliefert werden, wird es am Anfang des Betriebes eines solchen Netzes mehrere Betriebszentren geben. Man unterscheidet zwischen Betriebszentren für das BSS (OMC-BSS) und Betriebszentren für das SSS (OMC-SSS oder kurz: OMC).

Die in den Figuren nicht gezeigte Überleiteinrichtung GMSC hat die Aufgabe, das Mobilfunknetz PLMN mit dem Telefonnetz ISDN zu verbinden. Für diese Aufgabe ist im Mobilfunknetz keine gesonderte Einrichtung erforderlich, sie wird von einem Mobilfunkvermittlungsstelle MSC mit erledigt. In diesem Fall wird die Mobilfunkvermittlungsstelle dann GMSC genannt.

Mit SS7 ist das Signalisierungsnetz nach dem (an sich bekannten) Signalisierungssystem Nr. 7 bezeichnet, das im SSS die einzelnen Baugruppen miteinander verbindet.

Die logischen Kanäle der einzelnen Funkschnittstellen lassen sich in zwei Hauptgruppen, in Nutzkanäle und in Signalisierungskanäle, unterteilen. Die Nutzkanäle werden mit TCH ("Traffic Channel") bezeichnet. Es gibt vollratige Kanäle TCH/F und halbratige Kanäle TCH/H. Beide können Sprache, Nutzdaten und Signalisierung übertragen.

Die Signalisierungskanäle unterteilt man in drei Gruppen nach Rundrufkanälen BCH ("Broadcast Channel"), nach gemeinsam benutzten Kontrollkanälen CCCH ("Common Control Channel") und nach individuell benutzten Kontrollkanälen DCCH ("Dedicated Control Channel").

Als Rundrufkanälen BCH sind die Kanäle BCCH ("Broadcast Control Channel"), FCCH ("Frequency Correction Channel") und SCH ("Synchronisation Channel") vorgesehen. Als gemeinsam benutzte Kontrollkanäle CCCH sind die Kanäle PCH ("Paging Channel") und AGCH ("Access Grant Channel") - beides Downlink-Kanäle - sowie als Uplink-Kanal RACH ("Random Access Channel") vorgesehen. Als individuell benutzte Kontrollkanäle DCCH sind die Kanäle SACCH ("Slow Associated Control Channel"), SDCCH ("Stand Alone Dedicated Control Channel) und FACCH ("Fast Associated Control Channel") vorgesehen.

Die logischen Kanäle der Funkschnittstelle haben folgende Funktionen:

Über den Rundrufkanal BCCH werden allgemeine PLMN-Daten ausgestrahlt, die es der Mobilstation MS ermöglichen, sich im Netz zu orientieren. Der Frequenzkorrekturkanal FCCH und der Synchronisationskanal SCH unterstützen die Mobilstation MS bei der Frequenz- bzw. Rahmen-Synchronisation.

Die gemeinsam benutzten Kontrollkanäle CCCH sind Simplexkanäle. Zu ihnen gehören die Kanäle PCH, AGCH und RACH. Über den Rufkanal PCH sendet die Basisstation BTS Rufe an die Mobilstationen MS aus und über den gemeinsam genutzten Kontrollkanal AGCH teilt die Basisstation BTS den Mobilstationen MS dedizierte Kanäle zu. Über den gemeinsam genutzten Kontrollkanal RACH greifen die Mobilstationen MS auf das Netz zu, wenn sie eine Verbindung aufbauen möchten.

Die (rufende bzw. gerufene) Mobilstation MS belegt während des Gesprächsaufbaus einen individuell ihr zugeteilten Kanal DCCH mit niedriger Datenrate. Dieser ist für Signalisierungsfunktionen ausreichend. Erst wenn ein Nutzkanal für Sprache oder Daten benötigt wird, belegt die Mobilstation MS einen Nutzkanal TCH. Beiden Kanälen ist noch ein zusätzlicher Signalisierungskanal SACCH mit niedriger Bitrate zugeordnet.

All diese näher erläuterten Baugruppen und Kanäle sind an sich bekannte Elemente eines Mobilfunknetzes nach dem ETSI-GSM-Standard (vgl. hierzu die bereits erwähnte Artikelserie von H. Ochsner über das GSM-Netz), die auch in den Mobilfunknetzen nach FIG. 1-3 ihre Verwendung finden.

Neu hinzu kommen bei den Mobilfunknetzen nach Figur 1-3 lediglich die zusätzlichen Baugruppen DFS und LPC, wobei DFS ("Direction Finding System") für die Peiler steht (von denen beispielhaft jeweils einer in den Figuren gezeigt ist) und LPC ("Location Processing Centre") für die Ortungszentrale, in der der Standort der zu ortenden Mobilstation MS aus den gelieferten Informationen der Heimat- bzw. Besucherdatei HLR, VLR bzw. aus den geliegerten Ergebnissen der Peilung bzw. Laufzeitmessung ermittelt wird.

Die Ortsbestimmung in den GSM-Mobilfunknetzen der Figuren 1-3 kann als teilnehmerpassives Verfahren ohne Mobilstations-Unterstützung bezeichnet werden. Die Ortsbestimmung ist ein einmaliger Vorgang, der i.a. aus mehreren zeitlich aufeinander folgenden Einzelmessungen besteht, aus denen der Aufenthaltsort der gesuchten Mobilstation MS berechnet wird.

Die Ortsverfolgung dagegen ermöglicht es, die Bewegung einer Mobilstation MS mit unterschiedlichen Genauigkeitsstufen aufzuzeigen. Dies geschieht durch wiederholte Anwendung der Verfahren zur Ortsbestimmung und Auswertung der Ergebnisse. Die Genauigkeit der Ortsverfolgung wird weitgehend durch die Genauigkeit der Ortsbestimmung festgelegt. Es ist jedoch denkbar, daß sich die Genauigkeit durch Nachverarbeitung mit zusätzlichen Informationen (z.B. über den Verlauf von Straßen) verbessern läßt.

Der momentane Aufenthaltsort einer Mobilstation MS kann dabei mit unterschiedlichen Genauigkeitsstufen bestimmt werden. Es sind z.B. sechs Dienstklassen zur Ortsbestimmung denkbar, die sich im Grad ihrer Genauigkeit unterscheiden:
- PLMN Area Finding
- VLR Area Finding
- LA Finding
- Cell Area Finding
- Single Direction Finding
- Multiple Direction Finding

Die Begriffe PLMN ("Public Land Mobile Network"), VLR ("Visitor Location Area) und LA ("Location Area") sind den ETSI-GSM-Empfehlungen entnommen.
1. PLMN Area Finding:
   Es wird überwacht, in welchem Mobilfunknetz sich der Teilnehmer bzw. die Mobilstation MS aufhält. Ein solches Netz hat meistens die Größe eines Landes. Die Überwachung geschieht durch Abfragen von Daten, die in der Heimatdatei HLR gespeichert sind.
2. VLR Area Finding:
   Es wird überwacht, in welcher Besucherdatei VLR der Teilnehmer bzw. die Mobilstation MS registriert ist. Eine "VLR Area" ist das Gebiet, das durch eine solche Besucherdatei VLR kontrolliert wird. Es ist meist mehrere tausend Quadratkilometer groß. Die Überwachung geschieht durch Abfragen von Daten, die in der Heimatdatei HLR gespeichert sind.
3. Location Area Finding:
   Es wird überwacht, in welchem Teilgebiet eines VLR-Gebietes sich der Teilnehmer bzw. die Mobilstation MS aufhält. Eine "Location Area" LA beinhaltet mehrere Zellen (typisch 3 bis 20) und hat eine Fläche von typisch 100 qkm bis 10.000 qkm. Die Überwachung geschieht durch Abfragen von Daten, die in der Besucherdatei VLR gespeichert sind.
4. Cell Area Finding:
   Bei dieser Genauigkeitsstufe wird der Aufenthaltsort einer Mobilstation MS mit der Genauigkeit einer "Cell Area" CA, das ist eine Funkzelle, bestimmt. Die Cell Area hat eine Fläche von typisch 2,5 qkm im innerstädtischen Bereich und bis zu 1.000 qkm im ländlichen Bereich. In extremen Fällen kann die Cell Area eine Fläche bis zu 3.000 qkm abdecken. Die Überwachung geschieht durch das Rufen der Mobilstation MS ("paging"). Die Mobilstation MS meldet sich dann in der gesuchten Zelle.
5. Single Direction Finding:
   Bei dieser Genauigkeitsstufe wird der Aufenthaltsort einer Mobilstation MS mit hoher Genauigkeit bestimmt. Dabei erfolgt die Ortsbestimmung durch mindestens eine Laufzeitmessung (Entfernung) von einer Basisstation BTS aus und durch ein- oder mehrmaliges Peilen von einer Peilstation DFS aus (Peilwinkel, wobei i.a. die Bestimmung des Azimutwinkels ausreicht). Aus diesen beiden Angaben kann dann der Aufenthaltsort bestimmt werden. Voraussetzung für das Single Direction Finding ist das Cell Area Finding, denn die aktuelle Zelle, in der sich die gesuchte Mobilstation MS aufhält, muß bekannt sein, um die Ortsbestimmung durchführen zu können.
6. Multiple Direction Finding:
   Bei dieser Genauigkeitsstufe wird der Aufenthaltsort einer Mobilstation MS mit noch höherer Genauigkeit bestimmt. Dabei geschieht die Ortsbestimmung durch ein- oder mehrmaliges Peilen von mindestens zwei Peilstationen DFS aus (Peil- bzw. Azimutwinkel). Die Laufzeitmessung (Entfernung) von einer Basisstation BTS aus kann zur Erhöhung der Genauigkeit hinzugezogen werden, z.B. wenn sich die beiden Peilrichtungen unter spitzem oder flachem Winkel schneiden. Für das Multiple Direction Finding muß die aktuelle Zelle, in der sich der Teilnehmer aufhält, bekannt sein. Darüberhinaus muß abgeschätzt werden können, welche der benachbarten Peiler DFS für eine Peilung geeignet ist. Dazu werden die Peiler DFS gewählt, die denjenigen Zellen zugeordnet sind, die von der Mobilstation MS als die für die Peilung bestgeeignete Nachbarzellen an das Netz gemeldet werden.

Die Mobilstation MS steht während der Ortung mit dem GSM-Netz (BSS und SSS) in Funkverbindung (Funkverbindung 1). Diese Funkverbindung wird in der Regel zum Zwecke der Ortsbestimmung aufgebaut, sofern sie nicht bereits besteht. Der Peiler DFS empfängt das Funksignal der Mobilstation MS (Funkverbindung 2) und peilt die Richtung, aus der dieses Signal kommt.

In einer ersten Ausführung (FIG. 2 bzw. FIG. 3) erfolgt die Anbindung des Peilers DFS an das GSM-Netz (BSS, SSS) ebenfalls über Funk (Funkverbindung 3). Die Meldungen werden z.B. über den GSM-Dienst "short message service" zur Besucherdatei VLR übertragen. Die Anbindung über Funk hat den Vorteil, daß keine Leitungen zum Peiler DFS erforderlich sind, und daß im GSM-Netz keine Hardware für eine neue Schnittstelle erforderlich ist. Die Funkanbindung des Peilers DFS hat weiterhin den Vorteil, daß der Peiler DFS sowohl am gleichen Ort wie die Basisstation BTS sein kann, als auch abgesetzt von ihr. Über die Funkverbindung 3 hört der Peiler DFS auch die Rundrufkanäle BCH der Basisstation BTS ab und bekommt so die für die Peilung erforderliche Synchronisation (nähere Einzelheiten hierzu werden in der weiter unten erfolgenden Beschreibung der FIG. 4 erläutert).

In einer anderen Ausführung kann die Anbindung des Peilers DFS an das GSM-Netz (BSS, SSS) natürlich auch über eine (Draht-)Leitung an die Basisstation BTS (FIG. 1) oder die Basisstationssteuerung BSC erfolgen. Die Basisstation BTS versorgt im übrigen auch die Ortungszentrale LPC mit der nötigen Synchronisation. Die Kommunikation der Peildaten erfolgt ebenfalls über diese Verbindung.

Die Ortungszentrale LPC verwaltet die Ortungsaufträge der Kunden. Sie gibt Anstöße für Ortsbestimmungen im Netz und wertet die einlaufenden Ergebnisse aus. Ortungszentralen LPC existieren nur in geringer Anzahl in einem GSM-Netz. Die Anbindung der Ortungszentrale(n) LPC an das GSM-Netz erfolgt in einer ersten Ausführung über das SS7-Netz (FIG. 1 bzw. FIG. 2). Dies ist Voraussetzung, um alle Heimat- und Besucherdateien VLR und HLR erreichen zu können. Da die Schnittstelle zum SS7-Netz sehr aufwendig und teuer ist, wird in einer anderen Ausführung (FIG. 3) empfohlen, die (jeweilige) Ortungszentrale LPC in eine andere bereits bestehende GSM-Einheit zu integrieren oder daran anzuschließen. Der Zugang zum SS7-Netz erfolgt dann über diese Einheit. Dafür eignet sich z.B. die Betriebs- und Wartungszentrale OMC (FIG. 3).

Wenn die Anbindung des Peilers DFS über Funk erfolgt (FIG. 2 und 3), dann ist, wie in FIG. 4 dargestellt, die Funktion einer Mobilstation MS-DFS in dem Peiler DFS vorhanden. Die Mobilstation MS-DFS hat zwei Aufgaben. Zum einen ist sie für die Synchronisation des Peilers DFS verantwortlich, und zum anderen stellt sie die Verbindung für die Signalisierung zwischen dem Peiler DFS und der Besucherdatei VLR her.

Für die Synchronisation hört die Mobilstation MS-DFS die Synchronisationskanäle der Basisstation BTS über die Funkverbindung C in FIG. 4 ab und teilt dem Peiler DFS diese Information mit. Dies sind unter anderem die genaue Frequenz der Basisstation BTS, die Bit- und Rahmensynchronisation, die Systemzeit, die von der Basisstation BTS verwendeten Funkfrequenzen und der Modus des Frequenzsprungverfahrens. Das Abhören dieser Information ist passiv, d.h. die Mobilstation MS-DFS muß nur empfangen.

Für die zweite Aufgabe, die Verbindung für die Signalisierung mit der in FIG. 4 nicht gezeigten Besucherdatei VLR herzustellen, benötigt die Mobilstation MS-DFS sowohl den Empfangs- als auch den Sendeteil. Es wird über die Funkverbindung C in FIG. 4 eine Verbindung für die Signalisierung zur Besucherdatei VLR hergestellt, über die die Mobilstation MS-DFS die Kommandos zum Peilen erhält und die Ergebnisse abliefert. Wird ein Peilkommando von der Mobilstation MS-DFS empfangen, so werden dem Peiler DFS die Daten des Kanales der zu peilenden Mobilstation MS, das sind die Daten der Funkverbindung A in FIG. 4, mitgeteilt. Der Peiler DFS hört diesen Kanal passiv ab (Funkverbindung B in FIG. 4) und teilt die Ergebnisse der Mobilstation MS-DFS mit. Diese sendet sie über die Funkverbindung C an die Basisstation BTS, die sie an die Besucherdatei VLR weiterreicht.

Im einzelnen geschieht dabei folgendes:
1. Zur Synchronisation hat jede Basisstation BTS auf einer Frequenz im Zeitschlitz 0 einen gemeinsamen Kontrollkanal (Common Control Channel) CCCh. Dieser setzt sich aus mehreren "Unterkanälen" zusammen: CCCh = BCCh + AGCh + PCh + FCh + SCh + RACh.
   Die Mobilstation MS und MS-DFS hören die Kanäle BCCh + FCh + SCh. Dadurch erhalten Sie alle Informationen für die Synchronisation.
2. Der Aufbau der Funkverbindung A zwischen der Mobilstation MS und der Basisstation BTS zum Zwecke der Ortung der Mobilstation MS geschieht wie folgt (der Peiler DFS ist am Verbindungsaufbau zwischen Netz (BTS) und Mobilstation MS nicht beteiligt):

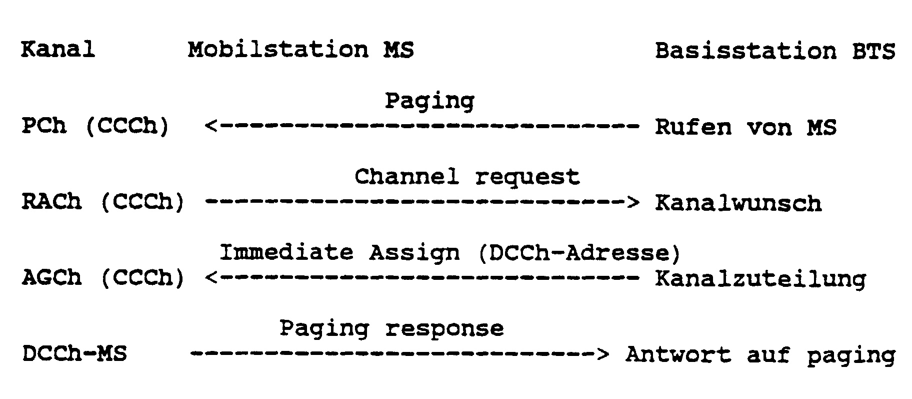

Damit ist eine DCCH-Verbindung (Funkverbindung A) zwischen der Mobilstation MS und der Basisstation hergestellt. Zu diesem Zeitpunkt ist der Peiler DFS noch nicht zugeschaltet.

Für die Abwicklung von Peilaufträgen wird auf gleiche Weise eine entsprechende DCCH-Verbindung (Funkverbindung C) zwischen der Basisstation BTS und der Mobilstation MS-DFS des Peilers DFS aufgebaut. Diese Verbindung kann je nach Bedarf aufgebaut werden oder als ständige Verbindung unabhängig von der Abwicklung von Peilaufträgen gehalten werden. Über diese DCCH-Verbindung erhält der Peiler DFS den Peilauftrag mit der Meldung "direction command", die alle notwendigen Informationen enthält, die der Peiler DFS braucht um den Peilauftrag durchzuführen. Hierzu empfängt der Peiler DFS die Funksignale der Mobilstation MS (Funkverbindung C). Das Peilergebnis (Peil- bzw. Azimutwinkel, Peilqualität usw.) wird anschließend vom Peiler DFS über die DCCH-Verbindung (Funkverbindung C) der Basisstation BTS übermittelt und von dort an die Besucherdatei VLR (in FIG. 4 nicht gezeigt) bzw. an die Ortungszentrale LPC (ebenfalls in FIG. 4 nicht gezeigt) weitergeleitet. Nach Abschluß der Ortung wird die DCCH-Verbindung (Funkverbindung A) zwischen der Basisstation BTS und der Mobilstation MS wieder abgebaut.

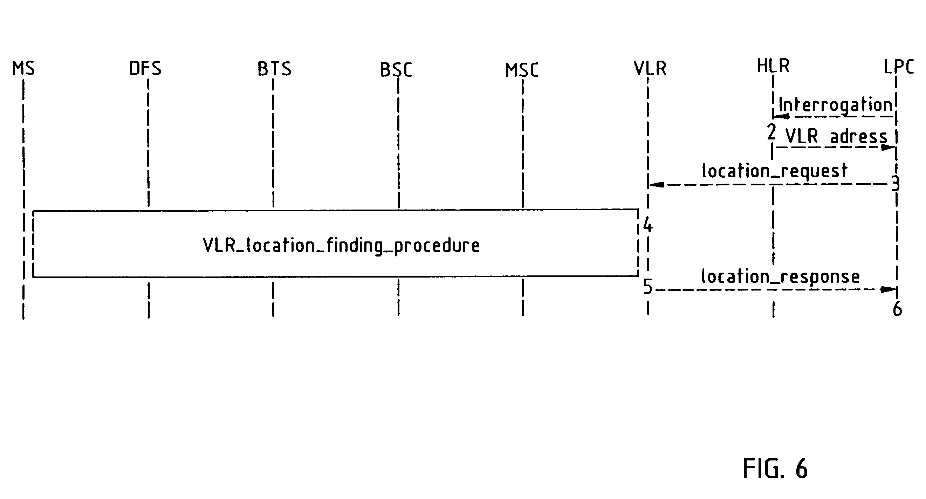

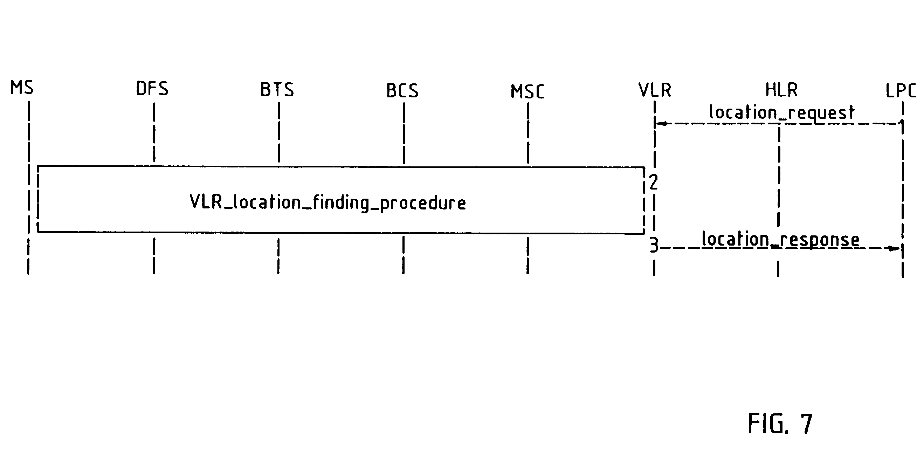

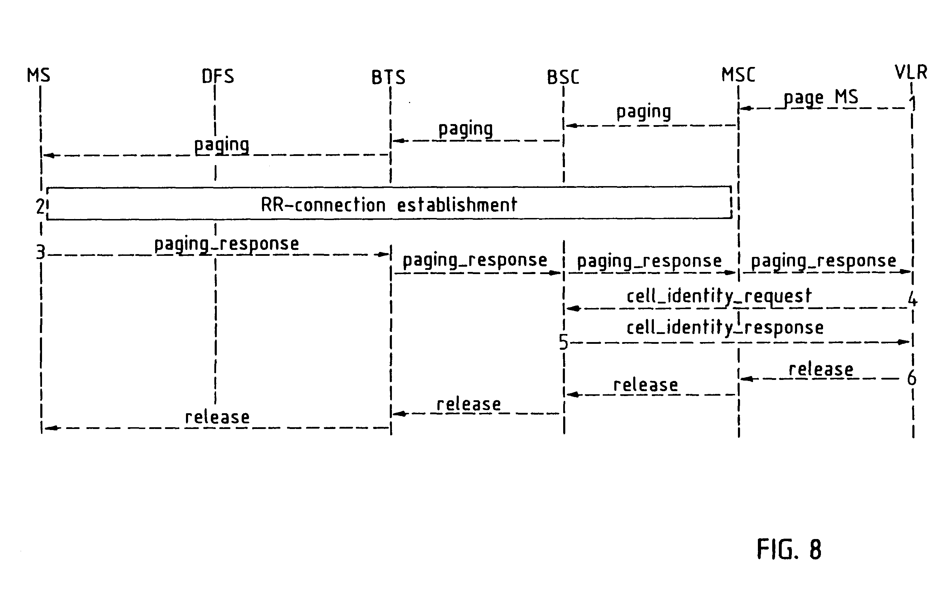

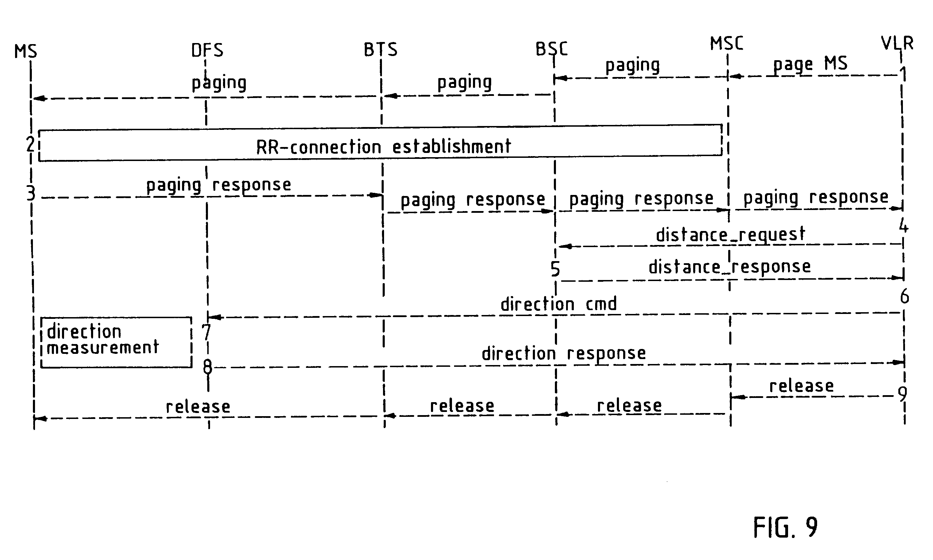

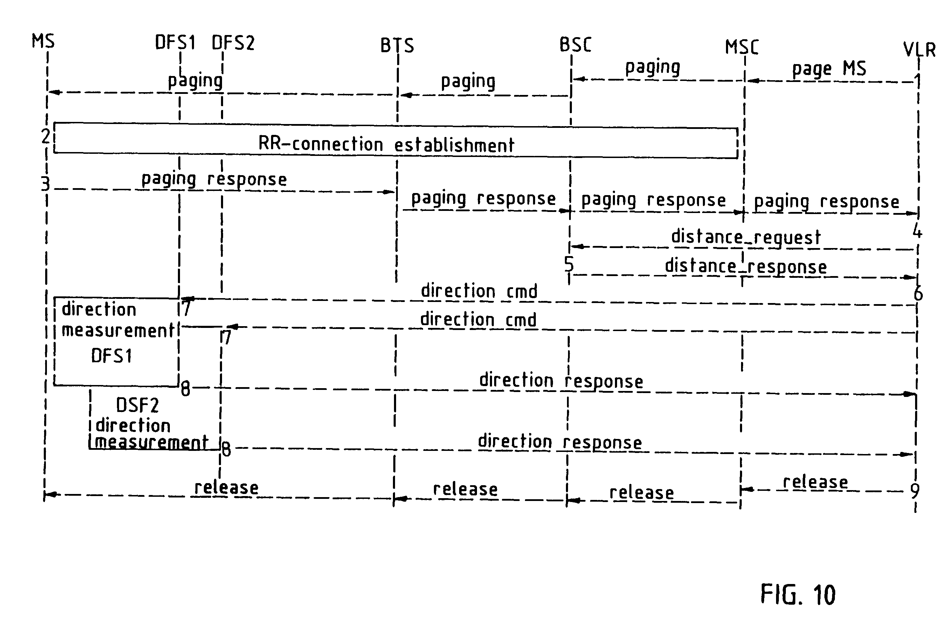

Der Ablauf der Kommunikation im Netz bei der Abwicklung von Ortungsaufträgen ist in den Figuren 5 bis 10 dargestellt und gestaltet sich wie folgt:
1. Ortungsauftrag an die Heimatdatei HLR der zu ortenden Mobilstation MS (FIG. 5):
   Diese Art der Standortbestimmung ist dann angebracht, wenn die zu ortende Mobilstation MS sehr beweglich ist und/oder eine Ortsbestimmung nur sehr selten durchgeführt wird.
   Um die gesuchte Mobilstation MS zu orten, werden folgende, in FIG. 5 dargestellte Verfahrensschritte durchgeführt:
   1. Die Ortungszentrale LPC stellt die Notwendigkeit einer Ortsbestimmung für eine bestimmte Mobilstation MS fest und gibt mit der Meldung "location request" den Auftrag zur Ortsbestimmung an die Heimatdatei HLR der gesuchten Mobilstation MS.
   2. Die Heimatdatei HLR kennt die aktuelle Besucherdatei VLR, in der die gesuchte Mobilstation MS momentan registriert ist, und gibt den Ortungsauftrag mit der Meldung "location request" an diese Besucherdatei VLR weiter.
   3. Die Besucherdatei VLR organisiert die (weiter unten unter Punkt 4 näher erläuterte) Abwicklung des Ortungsauftrags ("VLR location finding procedure").
   4. Die Besucherdatei VLR gibt das Ergebnis der Ortsbestimmung an die Heimatdatei HLR und beendet ihrerseits das Ortungsverfahren ("location response").
   5. Die Heimatdatei HLR gibt das Ergebnis der Ortsbestimmung an die Ortungszentrale LPC weiter und beendet ihrerseits das Ortungsverfahren ("location response").
   6. Die Ortungszentrale LPC wertet die erhaltenen Daten aus und bestimmt daraus den momentanen Aufenthaltsort der gesuchten Mobilstation MS.
2. Ortungsauftrag an eine zunächst unbekannte Besucherdatei VLR (FIG. 6):
   Diese Art der Ortsbestimmung ist dann angebracht, wenn die gesuchte Mobilstation MS sich nur wenig bewegt und/oder eine Ortsbestimmung häufig durchgeführt wird.
   Um die gesuchte Mobilstation MS zu orten, werden folgende, in FIG. 6 dargestellte Verfahrensschritte durchgeführt:
   1. Die Ortungszentrale LPC stellt die Notwendigkeit einer Ortsbestimmung für eine bestimmte Mobilstation MS fest. Da die aktuelle Besucherdatei VLR, in der die Mobilstation MS momentan erfaßt ist, der Ortungszentrale LPC nicht bekannt ist, ermittelt die Ortungszentrale LPC jene durch eine Abfrage-Prozedur. Hierzu sendet die Ortungszentrale LPC die Meldung "Interrogation" an die Heimatdatei HLR der gesuchten Mobilstation MS.
   2. Die Heimatdatei HLR der gesuchten Mobilstation MS beantwortet die Anfrage der Ortungszentrale LPC mit der momentanen VLR-Adresse der gesuchten Mobilstation MS.
   3. Die Ortungszentrale LPC gibt den Ortungsauftrag mit der Meldung "location request" direkt an die ermittelte Besucherdatei VLR.
   4. Die Besucherdatei VLR organisiert die (weiter unten unter Punkt 4 erläuterte) Abwicklung des Ortungsauftrags ("VLR location finding procedure").
   5. Die Besucherdatei VLR gibt das Ergebnis der Ortsbestimmung direkt an die Ortungszentrale LPC und beendet das Ortungsverfahren ("location response").
   6. Die Ortungszentrale LPC wertet die erhaltenen Daten aus und bestimmt daraus den momentanen Aufenthaltsort der gesuchten Mobilstation MS.
3. Ortungsauftrag an eine bereits bekannte Besucherdatei VLR (FIG. 7):
   Diese Art der Ortsbestimmung ist beispielsweise dann angebracht, wenn z.B. nach einer erfolgten (ersten) Ortsbestimmung eine Ortsverfolgung durchgeführt wird, da hier durch die jeweils vorangegangenen Ortsbestimmungen die jeweils aktuelle Besucherdatei VLR der Ortungszentrale LPC bereits bekannt ist.
   Um die gesuchte Mobilstation MS zu orten, werden folgende in FIG. 7 dargestellte Verfahrensschritte durchgeführt.
   1. Die Ortungszentrale LPC stellt die Notwendigkeit einer Ortsbestimmung für eine bestimmte Mobilstation MS fest und gibt mit der Meldung "location request" den Auftrag zur Ortsbestimmung direkt an die ihr bereits bekannte aktuelle Besucherdatei VLR, in der die gesuchte Mobilstation MS momentan erfaßt ist.
   2. Die Besucherdatei VLR organisiert die (weiter unten unter Punkt 4 näher erläuterte) Abwicklung des Ortungsauftrags ("VLR location finding procedure").
   3. Die Besucherdatei VLR gibt das Ergebnis der Ortsbestimmung direkt an die Ortungszentrale LPC und beendet das Ortungsverfahren ("location response").
   4. Die Ortungszentrale LPC wertet die erhaltenen Daten aus und bestimmt den momentanen Aufenthaltsort der gesuchten Mobilstation MS.
4. Organisation der Abwicklung eines Ortungsauftrags durch die Besucherdatei VLR:
   Wie unter den vorangegangenen Punkten 1. bis 3. beschrieben worden ist, erhält die aktuelle Besucherdatei VLR, in der die gesuchte Mobilstation-MS momentan erfaßt ist, von der Ortungszentrale LPC den entsprechenden Ortungsauftrag. Dies geschieht entweder direkt (mit (FIG. 6) oder ohne (FIG. 7) vorgeschaltete Abfrage der zugeordneten Heimatdatei HLR) oder indirekt über die zwischengeschaltete Heimatdatei HLR (FIG. 5). Das von der Besucherdatei VLR organisierte Ortungsverfahren wird von der Ortungszentrale LPC mit der Meldung "location request" bei der aktuellen Besucherdatei VLR angestoßen, wenn die Ortsbestimmung mit der Genauigkeitsstufe "Cell Area Finding" oder "Single Location Finding" oder "Multiple Location Finding" durchgeführt werden soll. Dabei zeigt ein Informationselement in der Meldung "location request" der angesprochenen Besucherdatei VLR die von der Ortungszentrale LPC geforderte Genauigkeitsstufe der Ortsbestimmung an.
   a) Ortungsgenauigkeitsstufe "Cell Area Finding" (FIG. 8):
      Ist in der Meldung "location request" die Genauigkeitsstufe für die Ortsbestimmung mit "Cell Area Finding" angegeben, dann wird nur die aktuelle Zelle der gesuchten Mobilstation MS festgestellt.
      Um die gesuchte Zelle festzustellen, in der sich die gesuchte Mobilstation MS momentan befindet, werden folgende, in FIG. 8 dargestellte Verfahrensschritte durchgeführt:
      1. Die Besucherdatei VLR ruft die gesuchte Mobilstation MS mit der Meldung "paging", die über die Mobilfunkvermittlungsstelle MSC und die Basisstationssteuerung BSC schließlich die entsprechenden Basisstationen BTS erreicht und von dort in die von ihnen bedienten Zellen per Funk ausgesendet wird.
      2. Die gerufene Mobilstation MS meldet sich in ihrer Zelle, in der sie sich gerade befindet, und stellt mit der Meldeprozedur "Radio-Resource(RR)-connection-establishment" eine feste Verbindung zu der zur Mobilfunkvermittlungsstelle MSC her.
      3. Während des Verbindungsaufbaus "RR-connection establishment" wird die Meldung "paging response" an die Besucherdatei VLR gesendet.
      4. Die Besucherdatei VLR erfragt mit der Meldung "cell identity request" die aktuelle Zelle der gesuchten Mobilstation MS.
      5. Die zuständige Basisstationssteuerung BSC teilt der Besucherdatei VLR die gesuchte Zelle mit der Meldung "cell identity response" mit.
      6. Die Besucherdatei VLR baut die Verbindung zur Mobilstation MS über die Mobilfunkvermittlungsstelle MSC, die Basisstationssteuerung BSC und die zugehörige Basisstation BTS mit der Meldung "release" ab und sendet die Ergebnisse (Zellen-Nummer) mit der Meldung "location_response" an die Ortungszentrale LPC zurück (wie z.B. in den Figuren 5 bis 7 gezeigt).
   b) Ortungsgenauigkeitsstufe "Single Location Finding" (FIG.9):
      Ist in der Meldung "location request" die Genauigkeitsstufe für die Ortsbestimmung mit "Single Location Finding" angegeben, dann wird der genaue Ort der Mobilstation MS von einem Standort aus durch die Kombination von Peilung (Peilwinkel) und Laufzeitmessung (Entfernung) festgestellt.
      Um den momentanen Standort der gesuchten Mobilstation MS festzustellen, werden folgende, in FIG. 9 dargestellte Verfahrensschritte durchgeführt.
      1. Die Besucherdatei VLR ruft die gesuchte Mobilstation MS mit der Meldung "paging", die (wie in FIG. 8) über die Mobilfunkvermittlungsstelle MSC und die Basisstationssteuerung BSC zu den entsprechenden Basisstationen BTS gelangt und von dort in die von ihnen bedienten Zellen per Funk ausgesendet wird.
      2. Die gerufene Mobilstation MS meldet sich in ihrer Zelle, in der sie sich gerade befindet und stellt mit der Meldeprozedur "Radio-Resource(RR)-connection-establishment" eine feste Verbindung mit der Mobilfunkvermittlungsstelle MSC her.
      3. Während des Verbindungsaufbaus "RR-connection establishment" wird die Meldung "paging response" an die Besucherdatei VLR gesendet.
      4. Die Besucherdatei schickt die Meldung "distance request" zur Basisstationssteuerung BSC.
      5. Die Basisstationssteuerung BSC antwortet mit der Meldung "distance response"; diese Meldung enthält mindestens die folgenden Daten: a) Angaben zur Zelle, in der sich die Mobilstation MS momentan befindet ("cell identity"), für die Ortsbestimmung und um den geeigneten Peiler DFS auszusuchen, b) die Daten des Funkkanals, den die gesuchte Mobilstation MS benutzt, und c) der Wert des Zeitversatzes ("timing-advance"), um den die Mobilstation MS aufgrund ihrer Entfernung von der Basisstation BTS ihre Meldungen verzögert absenden muß, damit diese von der Basisstation BTS in den dieser Mobilstation MS jeweils zugeordneten Zeitschlitzen korrekt empfangen werden können. Aus dem "timing-advance" kann dann die Entfernung der Mobilstation MS von der Basisstation BTS auf einfache Art errechnet werden.
      6. Die Besucherdatei VLR sucht in Abhängigkeit von der ermittelten Zelle ("cell identity") den für die Peilung geeigneten Peiler DFS aus und schickt die Aufforderung zum Peilen der gesuchten Mobilstation MS ("direction command" bzw. "direction cmd") an den ausgewählten Peiler DFS. In dieser Meldung sind die Daten des Funkkanals der zu peilenden Mobilstation MS enthalten.
      7. Der ausgewählte Peiler DFS führt mindestens eine Peilung (die aus einer Vielzahl von zeitlich aufeinander folgenden Einzelpeilungen bestehen kann) in dem mitgeteilten Funkkanal durch, der der gesuchten Mobilstation MS zugeordnet worden ist ("direction measurement").
      8. Das Ergebnis der Peilung (Peil- bzw. Azimutwinkel, ggf. Peilqualität) wird vom Peiler DFS mit der Meldung "direction response" an die Besucherdatei VLR übermittelt. Damit ist der Peilauftrag für den Peiler DFS beendet.
      9. Die Besucherdatei VLR baut die Verbindung zur gesuchten Mobilstation MS über die Mobilfunkvermittlungsstelle MSC, die Basisstationssteuerung BSC und die entsprechende Basisstation BTS mit der Meldung "release" ab und sendet die Ergebnisse (Entfernung, Peil-bzw. Azimutwinkel usw.) mit der Meldung "location response" an die Ortungszentrale LPC zurück (wie z.B. in den Figuren 5 bis 7 gezeigt), die die Ergebnisse auswertet und den Standort der gesuchten Mobilstation MS ermittelt.
   c) Ortungsgenauigkeitsstufe "Multiple Direction Finding" (FIG. 10):
      Ist in der Meldung "location request" die Genauigkeitsstufe für die Ortsbestimmung mit "Multiple Direction Finding" angegeben, dann wird der genaue Ort der Mobilstation MS von mindestens zwei Standorten aus durch Kreuzpeilung festgestellt. Diese Genauigkeitsstufe ist in vielen Fällen genauer als die unter b) beschriebene Genauigkeitsstufe "Single Direction Finding".
      Um den momentanen Standort der gesuchten Mobilstation MS festzustellen, werden folgende, in FIG. 10 dargestellte Verfahrensschritte durchgeführt:
      1. Die Besucherdatei VLR ruft die gesuchte Mobilstation MS mit der Meldung "paging", die (wie in FIG. 8) über die Mobilfunkvermittlungsstelle MSC und die Basisstationssteuerung BSC zu den entsprechenden Basisstationen BTS gelangt und von dort in die von ihnen bedienten Zellen per Funk ausgesendet wird.
      2. Die gerufene Mobilstation MS meldet sich in ihrer Zelle, in der sie sich gerade befindet und stellt mit der Meldeprozedur "Radio-Resource(RR)-connection-establishment", eine feste Verbindung mit der Mobilfunkvermittlungsstelle MSC her.
      3. Während des Verbindungsaufbaus "RR-connection establishment" wird die Meldung "paging response" an die Besucherdatei VLR gesendet.
      4. Die Besucherdatei schickt die Meldung "distance request" zur Basisstationssteuerung BSC.
      5. Die Basisstationssteuerung BSC antwortet mit der Meldung "distance response"; diese Meldung enthält mindestens die folgenden Daten: a) Angaben zur Zelle, in der sich die Mobilstation MS momentan befindet ("cell identity"), für die Ortsbestimmung und um mindestens zwei geeignete Peiler DFS auszusuchen, b) die Daten des Funkkanals, den die Mobilstation MS benutzt, c) der Wert des Zeitversatzes ("timing-advance"), um den die Mobilstation MS aufgrund ihrer Entfernung von der Basisstation BTS ihre Meldungen verzögert absenden muß, damit diese von der Basisstation BTS in den dieser Mobilstation MS jeweils zugeordneten Zeitschlitzen korrekt empfangen werden können (aus dem "timing-advance" kann dann die Entfernung der Mobilstation MS von der Basisstation BTS auf einfache Art errechnet werden) sowie d) Informationen über die Nachbarzellen ("neighbour cell information"), um die mindestens zwei geeigneten Peiler DFS für die Kreuzpeilung auswählen zu können.
      6. Die Besucherdateien VLR wählt in Abhängigkeit von der ermittelten Zelle ("cell identity") und den Informationen über die Nachbarzellen ("neighbour cell information") mindestens zwei für die Kreuzpeilung geeignete Peiler DFS aus und schickt die Aufforderung zum Peilen der gesuchten Mobilstation MS ("direction command" bzw. "direction cmd") an die ausgewählten Peiler DFS. In diesen Meldungen sind die Daten des Funkkanals der zu peilenden Mobilstation MS enthalten und die Zellen-Nummer ("cell identity") der Zelle, in der sich die gesuchte Mobilstation MS momentan befindet.
      7. Die ausgewählten Peiler DFS führen die mindestens eine Peilung (die aus einer Vielzahl von zeitlich aufeinander folgenden Einzelpeilungen bestehen kann)in dem mitgeteilten Funkkanal durch, der der gesuchten Mobilstation MS zugeordnet worden ist ("direction measurement").
      8. Die Ergebnisse der Peilungen (Peil- bzw. Azimutwinkel und Peilqualität) werden von den Peilern DFS mit den Meldungen "direction response" an die Besucherdatei VLR übermittelt. Damit ist für die einzelnen ausgewählten Peiler DFS der Peilauftrag jeweils beendet.
      9. Die Besucherdatei VLR baut die Verbindung zu gesuchten Mobilstation MS über die Mobilfunkvermittlungsstelle MSC, die Basisstationssteuerung BSC und die entsprechende Basisstation BTS mit der Meldung "release" ab und sendet die Ergebnisse (Peil- bzw. Azimutwinkel, Peilqualität usw.) mit der Meldung "location-response" an die Ortungszentrale LPC (wie z.B. in den Figuren 5 bis 7 gezeigt), die die Ergebnisse auswertet und den Standort der gesuchten Mobilstation MS ermittelt.

Wesentliche Vorteile des Verfahrens sind: Eine grobe Ortsbestimmung ist durch Auswertung der Aufenthaltsinformation, die in den Registern HLR und VLR gespeichert ist, möglich. Die damit erzielbare Auflösung des Ortes der Mobilstation MS ist allerdings i.d. sehr grob. Für viele Zwecke der Beobachtung kann es jedoch ausreichend sein, das Gebiet ungefähr zu kennen. Wenn der Teilnehmer ein bestimmtes Gebiet betritt oder verläßt kann sofort auf die genaue Ortsbestimmung umgeschaltet werden. Ein beweglicher Teilnehmer kann dadurch jederzeit aufgefunden weren. Eine ständige Verfolgung ist - sofern erforderlich - möglich.

Durch die Abstufung in verschiedene Genauigkeitsklassen kann die Netzbelastung durch Ortungsaufträge minimiert werden.

Durch die Hinzunahme von Funkpeilern wird die Genauigkeit gegenüber den bekannten Verfahren erheblich verbessert, denn die Peilung erfolgt auf der Zwischenfrequenzebene durch Phasenvergleich. Das Ergebnis ist nicht vom Hersteller der Mobilstation MS abhängig. Auch die Mißweisung durch Mehrwegeausbreitung ist im Mittel geringer als der Fehler bei der Laufzeitmessung.

Die Standortbestimmung ist von einer Basisstation BTS aus ohne Hilfe von Nachbarstationen möglich. Dadurch kann die Standortbestimmung auch in Gebieten durchgeführt werden, in denen sich die Funkzellen nicht überlappen.

Zusätzlich zur Standortbestimmung von einer Basisstation BTS aus kann die Genauigkeit durch Kreuzpeilung weiter verbessert werden.

Durch die im Vergleich mit dem Mobilfunksystem höhere Störfestigkeit der Peilempfänger sind Kreuzpeilungen auch in Gebieten möglich, in denen die bekannten Verfahren versagen.

Die Erfindung ist nicht auf die geschilderten Ausführungsbeispiele beschränkt, sondern vielmehr auch auf andere übertragbar. So können viele der Aufgaben, die in den Ausführungsbeispielen der FIG. 5 bis 10 (beispielhaft) der Besucherdatei VLR zugewiesen worden sind, auch von anderen geeigneten Einrichtungen des Netzes wie z.B. der Mobilfunkvermittlungsstelle MSC oder der Ortungszentrale LPC übernommen werden.

Weiterhin ist denkbar, daß für den Fall, daß die Abwicklung des Ortungsauftrags über die ausgewählte Basisstation kein oder kein eindeutiges Ortungsergebnis liefert, anschließend über mindestens eine weitere Basisstation mindestens eine weitere Laufzeitmessung und/oder mindestens eine weitere Peilung abgewickelt wird. Wenn also über die an sich "zuständige" Basisstation z.B. infolge von Abschattungs- bzw. Mehrwegeausbreitungseffekten keine oder keine eindeutige Ortung der gesuchten Mobilstation möglich ist, kann bei dieser Weiterbildung der Erfindung in der Regel dennoch eine Standortbestimmung erfolgen, in dem der Ortungsauftrag z.B. über benachbarte Basisstation(en) abgewickelt wird.

Schließlich kann die Genauigkeit bzw. Eindeutigkeit der Standortbestimmung durch den Einsatz von Ortsdiversity und/oder durch Messung bei verschiedenen Frequenzen (z.B. in Form von Frequenz-Hopping) gesteigert werden. Diese beiden Maßnahmen sind vor allem dann nutzbringend, wenn eine Mobilstation geortet werden soll, die sich nicht bewegt (z.B. infolge eines Unfalls oder einer Panne oder eines Verkehrsstaus), oder wenn die Empfangsverhältnisse bei einer Empfangsfrequenz bzw. einem Empfangsort (Empfangsantenne) schlecht sind.

## Patentansprüche

1. Verfahren zur Ortung von Mobilstationen (MS) in einem zellular aufgebauten Mobilfunknetz mit mehreren räumlich verteilten und jeweils einer oder mehreren Zellen zugeordneten ortsfesten Basisstationen (BTS) und mindestens einer Mobilstation (MS), welches Netz mindestens eine Speicher-Einrichtung (HLR, VLR) aufweist, welche Informationen über die Identität der mindestens einen Mobilstation (MS) sowie über die Zelle oder die Zellengruppe enthält, in der die mindestens eine Mobilstation (MS) zuletzt gemeldet war, dadurch gekennzeichnet, daß die Informationen der Speicher-Einrichtung (HLR, VLR) zur groben Ortsbestimmung der zu ortenden Mobilstation (MS) verwendet werden und daß zur genaueren Ortsbestimmung mindestens eine Peilung durchgeführt wird.

2. Verfahren nach Anspruch 1, dadurch gekennzeichnet, daß die Ortsbestimmung der zu ortenden Mobilstation (MS) mit unterschiedlichen Genauigkeitsstufen durchgeführt wird und daß die Genauigkeitsstufen so gewählt sind, daß die Fläche innerhalb der der Aufenthaltsort der zu ortenden Mobilstation (MS) liegt, das Gebiet des Netzbetreibers oder ein Teilgebiet davon oder eine Gruppe von benachbarten Zellen oder eine einzelne Zelle oder ein Teilgebiet einer solchen Zelle ist.

3. Verfahren nach einem der Ansprüche 1 oder 2, dadurch gekennzeichnet, daß zur Ortsbestimmung innerhalb einer Zelle die Entfernung der zu ortenden Mobilstation (MS) von mindestens einer Basisstation (BTS) durch mindestens eine Laufzeitmessung und der Azimutwinkel durch die mindestens eine Peilung bestimmt werden.

4. Verfahren nach Anspruch 3, welches Verfahren in einem zellular aufgebauten und vorzugsweise nach dem ETSI-GSM-Standard konzipierten Mobilfunknetz angewendet wird, welches mindestens eine Ortungszentrale (LPC) mindestens eine Heimatdatei (HLR), mindestens eine Besucherdatei (VLR), mindestens eine Basisstationssteuerung (BSC) und mindestens einen Peiler (DFS) aufweist, dadurch gekennzeichnet,
- daß die Ortungszentrale (LPC) die Notwendigkeit einer Ortsbestimmung für eine bestimmte Mobilstation (MS) feststellt und daraufhin diejenige Besucherdatei (VLR) ermittelt, in der die zu ortende Mobilstation (MS) momentan erfaßt ist, und eine geeignete Netzeinrichtung, vorzugsweise diese Besucherdatei (VLR) direkt oder über die Heimatdatei (HLR) der gesuchten Mobilstation (MS) mit der Ortung der gesuchten Mobilstation (MS) beauftragt (location request) ;
- daß die Netzeinrichtung, vorzugsweise die Besucherdatei (VLR) die gesuchte Mobilstation (MS) über die Basisstationen (BTS) des Netzes ruft (paging);
- daß die gerufene Mobilstation (MS) sich in ihrer Zelle, in der sie sich momentan befindet, mit einer vorgegebenen Meldeprozedur (RR-connection-procedure) meldet;
- daß die Mobilstation (MS) anschließend den Suchruf (paging) der Netzeinrichtung, vorzugsweise der Besucherdatei (VLR) beantwortet (paging response) und diese Antwort (paging response) bis zur Netzeinrichtung, vorzugsweise bis zur Besucherdatei (VLR) geht;
- daß die Netzeinrichtung, vorzugsweise die Besucherdatei (VLR) anschließend einen Auftrag zur Entfernungsmessung (distance request) an die Basisstationssteuerung (BSC) sendet;
- daß die Netzeinrichtung, vorzugsweise die Basisstationssteuerung (BSC) in ihrer Antwort (distance request) der Netzeinrichtung, vorzugsweise der Besucherdatei (VLR) folgende Daten mitteilt: a) Angabe zur Zelle, in der sich die gesuchte Mobilstation (MS) momentan befindet (cell identity), für die Ortsbestimmung und um einen geeigneten Peiler (DFS) für die Peilung auszuwählen, b) Daten des Funkkanals, der der gesuchten Mobilstation (MS) zugewiesen worden ist, c) den Wert des Zeitversatzes (timing advance), um den die Mobilstation (MS) aufgrund ihrer Entfernung von der Basisstation (BTS) ihre Meldungen verzögert absenden muß, damit diese von der Basisstation (BTS) in den dieser Mobilstation (MS) jeweils zugeordneten Zeitschlitzen empfangen werden können;
- daß die Netz einrichtung, vorzugsweise die Besucherdatei (VLR) in Abhängigkeit von der ermittelten Zelle (cell identity) den für die Peilung geeigneten Peiler (DFS) auswählt und an diesen Peiler (DFS) anschließend eine Aufforderung zum Peilen (direction cmd) der gesuchten Mobilstation (MS) sendet, in welcher Aufforderung die Daten des der Mobilstation (MS) zugewiesenen Funkkanals enthalten sind;
- daß der ausgewählte Peiler (DFS) anschließend die ggf. aus mehreren zeitlich aufeinander folgenden Einzelpeilungen bestehende mindestens eine Peilung der Mobilstation (MS) in dem der Mobilstation (MS) zugewiesenen Funkkanal durchführt (direction measurement);
- daß der Peiler (DFS) anschließend das Ergebnis der Peilung wie Peil- bzw. Azimutwinkel, Peilqualität usw. an die Netzeinrichtung, vorzugsweise die Besucherdatei (VLR) übermittelt (direction response) und danach den Peilvorgang beendet;
- daß die Netzeinrichtung, vorzugsweise die Besucherdatei (VLR) die Verbindung zur gesuchten Mobilstation (MS) abbaut und die Ergebnisse der Ortung wie Zellennummer, Entfernung von der Basisstation (BTS), Peil- bzw. Azimutwinkel, Peilqualität usw. an die Ortungszentrale (LPC) übermittelt (location response), in der (LPC) aus diesen Ergebnissen der momentane Ort der gesuchten Mobilstation (MS) ermittelt wird.

5. Verfahren nach einem der Ansprüche 3 oder 4, dadurch gekennzeichnet, daß für den Fall, daß die Abwicklung des Ortungsauftrags über die ausgewählte Basisstation (BTS) kein oder kein eindeutiges Ortungsergebnis liefert, anschließend über mindestens eine weitere Basisstation (BTS) mindestens eine weitere Laufzeitmessung und/oder mindestens eine weitere Peilung abgewickelt wird.

6. Verfahren nach einem der Ansprüche 1 oder 2, dadurch gekennzeichnet, daß zur Ortsbestimmung innerhalb einer Zelle mindestens eine Kreuzpeilung durchgeführt wird.

7. Verfahren nach Anspruch 6, welches Verfahren in einem zellular aufgebauten und vorzugsweise nach dem ETSI-GSM-Standart konzipierten Mobilfunknetz angewendet wird, welches mindestens eine Ortungszentrale (LPC), mindestens eine Heimatdatei (HLR), mindestens eine Besucherdatei (VLR), mindestens eine Basisstationssteuerung (BSC) und mindestens zwei Peiler (DES) aufweist, dadurch gekennzeichnet,
- daß die Ortungszentrale (LPC) die Notwendigkeit einer Ortsbestimmung für eine bestimmte Mobilstation (MS) feststellt und daraufhin diejenige Besucherdatei (VLR) ermittelt, in der die zu ortende Mobilstation (MS) momentan erfaßt ist, und eine geeignete Netz einrichtung, vorzugsweise diese Besucherdatei (VLR) direkt oder über die Heimatdatei (HLR) der gesuchten Mobilstation (MS) mit der Ortung der gesuchten Mobilstation (MS) beauftragt (location request) ;
- daß die Netzeinrichtung, vorzugsweise die Besucherdatei (VLR) die gesuchte Mobilstation (MS) über die Basisstationen (BTS) des Netzes ruft (paging);
- daß die gerufene Mobilstation (MS) sich in ihrer Zelle, in der sie sich momentan befindet, mit einer vorgegebenen Meldeprozedur (RR-connection-procedure) meldet;
- daß die Mobilstation (MS) anschließend den Suchruf (paging) der Netz einrichtung, vorzugsweise der Besucherdatei (VLR) beantwortet (paging response) und diese Antwort (paging response) bis zur Netzeinrichtung, vorzugsweise bis zur Besucherdatei (VLR) geht;
- daß die Netzeinrichtung, vorzugsweise die Besucherdatei (VLR) anschließend einen Auftrag zur Entfernungsmessung (distance request) an die Basisstationssteuerung (BSC) sendet;
- daß die Basisstationssteuerung (BSC) in ihrer Antwort (distance request) der Netz einrichtung, vorzugsweise der Besucherdatei (VLR) folgende Daten mitteilt: a) Angabe zur Zelle, in der sich die gesuchte Mobilstation (MS) momentan befindet (cell identity), für die Ortsbestimmung und um mindestens zwei geeignete Peiler (DFS) für die Peilung auszuwählen, b) Daten des Funkkanals, der der Mobilstation (MS) zugewiesen worden ist, c) den Wert des Zeitversatzes (timing advance), um den die Mobilstation (MS) aufgrund ihrer Entfernung von der Basisstation (BTS) ihre Meldungen verzögert absenden muß, damit diese von der Basisstation (BTS) in den dieser Mobilstation (MS) jeweils zugeordneten Zeitschlitzen empfangen werden können, sowie d) Informationen über die Nachbarzellen (neighbour cell information), um mindestens zwei geeignete Peiler (DFS) für die Kreuzpeilung auswählen zu können;
- daß die Netz einrichtung, vorzugsweise die Besucherdatei (VLR) in Abhängigkeit von der ermittelten Zelle (cell identity) und den Informationen über die Nachbarzellen (neighbour cell information) mindestens zwei für die Kreuzpeilung geeignete Peiler (DFS) auswählt und an diese Peiler (DFS) anschließend eine Aufforderung zum Peilen (direction command) der gesuchten Mobilstation (MS) sendet, in welcher Aufforderung die Daten des der Mobilstation (MS) zugewiesenen Funkkanals enthalten sind;
- daß die ausgewählten Peiler (DFS) anschließend parallel die ggf. aus mehreren zeitlich aufeinanderfolgenden Einzelpeilungen bestehende mindestens eine Peilung der Mobilstation (MS) in dem der Mobilstation (MS) zugewiesenen Funkkanal durchführen (direction measurement);
- daß die ausgewählten Peiler (DFS) anschließend das Ergebnis ihrer Peilung wie Peil- bzw. Azimutwinkel, Peilqualität usw. an die Netzeinrichtung, vorzugsweise die Besucherdatei (VLR) übermitteln (direction response) und danach den Peilvorgang beenden;
- daß die Netzeinrichtung, vorzugsweise die Besucherdatei (VLR) die Verbindung zur gesuchten Mobilstation (MS) abbaut und die Ergebnisse der Ortung wie Zellen-Nummer, Peilwinkel, Peilqualität usw. an die Ortungszentrale (LPC) übermittelt (location response), in der (LPC) aus diesen Ergebnissen der momentane Ort der gesuchten Mobilstation (MS) ermittelt wird.

8. Verfahren nach einem der Ansprüche 3 bis 7, dadurch gekennzeichnet, daß zur Ortsbestimmung innerhalb einer Zelle die Ergebnisse der mindestens einen Laufzeitmessung und der mindestens einen Kreuzpeilung miteinander kombiniert werden.

9. Verfahren nach einem der Ansprüche 3 bis 8, dadurch gekennzeichnet, daß während eines Peilvorgangs von dem (den) Peiler(n) (DFS) mehrere Peilungen nacheinander durchgeführt werden.

10. Verfahren nach einem der Ansprüche 3 bis 9, dadurch gekennzeichnet, daß zur Feststellung der Zellennummer (cell identity), in der sich die gesuchte Mobilstation (MS) momentan befindet, die Netzeinrichtung, vorzugsweise die Besucherdatei (VLR) nach Empfang der Antwort (paging response) der Mobilstation (MS) auf den Suchruf (paging) der Netzeinrichtung, vorzugsweise der Besucherdatei (VLR) eine entsprechende Anfrage (cell identity request) an die in Frage kommende Basisstationssteuerung (BSC) richtet und diese (BSC) die Zellennummer (cell identity) ermittelt und in ihrer Antwort (cell identity response) an die Besucherdatei (VLR) mitteilt.

11. Verfahren nach einem der Ansprüche 3 bis 10, dadurch gekennzeichnet, daß die Ortungszentrale (LPC) Ortungsaufträge entweder direkt an die Netzeinrichtung, vorzugsweise die zuständige Besucherdatei (VLR) gibt, sofern diese (VLR) der Ortungszentrale (LPC) bereits bekannt ist, oder indirekt über die Heimatdatei (HLR) der gesuchten Mobilstation (MS).

12. Verfahren nach einem der vorhergehenden Ansprüche, dadurch gekennzeichnet, daß zur Ortsverfolgung der Mobilstation (MS) mehrere Ortsbestimmungen zeitlich nacheinander durchgeführt werden.

13. Verfahren nach einem der vorhergehenden Ansprüche, dadurch gekennzeichnet, daß zur Steigerung der Genauigkeit und/oder Eindeutigkeit des Ortungsergebnisses Ortsdiversity eingesetzt wird und/oder Messungen auf verschiedenen Frequenzen (z.B. in Form von Frequenz-Hopping) durchgeführt werden.

14. Zellular aufgebautes Mobilfunknetz zum Durchführen des Verfahrens nach einem der vorhergehenden Ansprüche, mit mehreren räumlich verteilten und jeweils einer oder mehreren Zellen zugeordneten ortsfesten Basisstationen (BTS) und mindestens einer Mobilstation (MS) sowie mit mindestens einer Speicher-Einrichtung (HLR, VLR), welche Informationen über die Identität der mindestens einen Mobilstation (MS) sowie über die Zelle oder die Zellengruppe enthält, in der die mindestens eine Mobilstation (MS) zuletzt gemeldet war, dadurch gekennzeichnet, daß die einzelnen Basisstationen (BTS) oder zumindest ein Teil dieser Basisstationen (BTS) oder Gruppen von Basisstationen (BTS) jeweils mit mindestens einem ihnen zugeordneten Peiler (DFS) in Verbindung stehen und daß das Mobilfunknetz mindestens eine mit dem (den) Peiler(n) (DFS) in Verbindung stehende Ortungszentrale (LPC) aufweist.

15. Mobilfunknetz nach Anspruch 14, dadurch gekennzeichnet, daß die einzelnen Basisstationen (BTS) oder Basisstationsgruppen jeweils über eine Funk- oder Drahtverbindung mit den ihnen zugeordneten Peilern (DFS) verbunden sind.

16. Mobilfunknetz nach Anspruch 15, dadurch gekennzeichnet, daß die einzelnen Peiler (DFS) mit den für eine Funkverbindung zur ihnen jeweils zugeordneten Basisstation (BTS) erforderlichen Geräten (MS-DFS) einer Mobilstation ausgerüstet sind und daß die Funkverbindungen zu den ihnen jeweils zugeordneten Basisstationen (BTS) jeweils über diese Geräte (MS-DFS) hergestellt ist.

17. Mobilfunknetz nach einem der Ansprüche 14 bis 16, mit mindestens einer Betriebszentrale, dadurch gekennzeichnet, daß die Ortungszentrale (LPC) in die oder eine der Betriebs- und Wartungszentrale(n) (OMC) des Netzes integriert ist.

18. Mobilfunknetz nach einem der Ansprüche 14 bis 17, dadurch gekennzeichnet, daß die einzelnen Basisstationen (BTS) beim Empfang über Ortsdiversity-Einrichtungen verfügen und/oder daß bei dem Netz Frequenzwechsel, z.B. Frequenz-Hopping möglich ist (sind).

19. Mobilfunknetz nach einem der Ansprüche 14 bis 18, dadurch gekennzeichnet, daß es nach dem ETSI-GSM-Standard aufgebaut ist.

## Claims

1. Method of locating mobile stations (MS) in a cellularly built-up mobile radio network with several spatially distributed stationary base stations (BTS) each associated with one or more cells and at least one mobile station (MS), which network comprises at least one storage device (HLR, VLR), which contains information about the identity of the at least one mobile station (MS) as well as about the cells or the cell groups in which the at least one mobile station (MS) was last reported, characterised thereby that the data of the storage device (HLR, VLR) are used for coarse determination of the location of the mobile station (MS) to be located and that at least one direction finding is carried out for more precise determination of the location.

2. Method according to claim 1, characterised thereby that the determination of the location of the mobile station (MS) to be located is carried out with different steps in precision and that the steps in precision are so selected that the area, within which the stop location of the mobile station (MS) to be located lies, is the region of the network operator or a partial region thereof or a group of adjacent cells or an individual cell or a partial region of such a cell.

3. Method according to one of claims 1 and 2, characterised thereby that for determination of location within a cell the distance of the mobile station (MS) to be located from at least one base station (BTS) is determined by at least one transit time measurement and the azimuthal angle by the at least one direction finding.

4. Method according to claim 3, which method is used in a cellularly built-up mobile radio network preferably conceived in accordance with the ETSI-GSM standard, which comprises at least one location centre (LPC), at least one home register (HLR), at least one visitor register (VLR), at least one base station control (BSC) and at least one direction finder (DFS), characterised thereby
- that the location centre (LPC) establishes the necessity of a determination of location for a specific mobile station (MS) and thereupon ascertains that visitor register (VLR) in which the mobile station (MS) to be located is instantaneously caught, and a suitable network equipment, preferably this visitor register (VLR), requests either directly or by way of the home register (HLR) of the sought mobile station (MS) the location (location request) of the sought mobile radio station (MS);
- that the network equipment, preferably the visitor register (VLR), calls the sought mobile station (MS) by way of the base stations (BTS) of the network (paging);
- that the called mobile station (MS) reports in its cell, in which it is instantaneously disposed, by a predetermined report procedure (RR connection procedure);
- that the mobile station (MS) subsequently answers (paging response) the search call (paging) of the network equipment, preferably the visitor register (VLR), and this answer (paging response) goes as far as the network equipment, preferably as far as the visitor register (VLR);
- that the network equipment, preferably the visitor register (VLR), subsequently transmits a request for distance measurement (distance request) to the base station control (BSC);
- that the network equipment, preferably the base station control (BSC), communicates in its answer (distance request) to the network equipment, preferably the visitor file (VLR), the following data: a) particulars relative to the cell in which the sought mobile station (MS) is instantaneously disposed (cell identity), for the determination of location and in order to select a suitable direction finder (DFS) for the direction finding, b) data of the radio channel which has been assigned to the sought mobile station (MS), and c) the value of the time displacement (timing advance) by which the mobile station (MS) must, due to its distance from the base station (BTS), send out its reports delayed so that these can be received by the base station (BTS) in the time slots respectively associated with this mobile station (MS);
- that the network equipment, preferably the visitor register (VLR), selects the direction finder (DFS), which is suitable for the direction finding, in dependence on the ascertained cell (cell identity) and subsequently transmits to this direction finder (DFS) a demand for direction finding (direction cmd) of the sought mobile station (MS), in which demand the data of the radio channel assigned to the mobile station (MS) are contained;
- that the selected direction finder (DFS) subsequently carries out the at least one direction finding (direction measurement), which in a given case consists of several individual direction findings successive in time, of the mobile station (MS) in the radio channel assigned to the mobile station (MS);
- that the direction finder (DFS) subsequently communicates the result of the direction finding (direction response), such as directional or azimuthal angle, direction quality, etc., to the network equipment, preferably the visitor register (VLR), and thereafter ends the direction-finding procedure; and
- that the network equipment, preferably the visitor register (VLR), breaks off the connection to the sought mobile station (MS) and communicates to the location centre (LPC) the results of the locating (location response), such as cell number, distance from the base station (BTS), directional or azimuthal angle, direction quality, etc., in which location centre (LPC) the instantaneous location of the sought mobile station (MS) is ascertained from these results.

5. Method according to one of claims 3 and 4, characterised thereby that in the case that the completion of the locating request does not deliver any or an unambiguous location result by way of the selected base station (BTS), a further transit time measurement and/or at least one further direction finding is subsequently run through by way of at least one further base station (BTS).

6. Method according to one of claims 1 and 2, characterised thereby that at least one cross-bearing process is performed for determination of location within a cell.

7. Method according to claim 6, which method is used in a cellularly built-up mobile radio network preferably conceived in accordance with the ETSI-GSM standard, which comprises at least one location centre (LPC), at least one home register (HLR), at least one visitor register (VLR), at least one base station control (BSC) and at least one direction finder (DFS), characterised thereby
- that the location centre (LPC) establishes the necessity of a determination of location for a specific mobile station (MS) and thereupon ascertains that visitor register (VLR) in which the mobile station (MS) to be located is instantaneously caught, and a suitable network equipment, preferably this visitor register (VLR), requests either directly or by way of the home register (HLR) of the sought mobile station (MS) the location (location request) of the sought mobile radio station (MS);
- that the network equipment, preferably the visitor register (VLR), calls the sought mobile station (MS) by way of the base stations (BTS) of the network (paging);
- that the called mobile station (MS) reports in its cell, in which it is instantaneously disposed, by a predetermined report procedure (RR connection procedure);
- that the mobile station (MS) subsequently answers (paging response) the search call (paging) of the network equipment, preferably the visitor register (VLR), and this answer (paging response) goes as far as the network equipment, preferably as far as the visitor register (VLR);
- that the network equipment, preferably the visitor register (VLR), subsequently transmits a request for distance measurement (distance request) to the base station control (BSC);
- that the base station control (BSC) communicates in its answer (distance request) to the network equipment, preferably the visitor file (VLR), the following data: a) particulars relative to the cell in which the sought mobile station (MS) is instantaneously disposed (cell identity), for the determination of location and in order to select two suitable direction finders (DFS) for the direction finding, b) data of the radio channel which has been assigned to the mobile station (MS), c) the value of the time displacement (timing advance) by which the mobile station (MS) must, due to its distance from the base station (BTS), send out its reports delayed so that these can be received by the base station (BTS) in the time slots respectively associated with this mobile station (MS), as well as d) data about the neighbouring cells (neighbour cell information) in order to be able to select at least two suitable direction finders (DFS) for the cross-bearing process;
- that the network equipment, preferably the visitor register (VLR), selects at least two direction finders (DFS), which are suitable for the cross-bearing process, in dependence on the ascertained cell (cell identity) and the data about the neighbouring cells (neighbour cell information) and subsequently transmits to these direction finders (DFS) a demand for direction finding (direction command) of the sought mobile station (MS), in which demand the data of the radio channel assigned to the mobile station (MS) are contained;
- that the selected direction finders (DFS) subsequently carry out in parallel the at least one direction finding (direction measurement), which in a given case consists of several individual direction findings successive in time, of the mobile station (MS) in the radio channel assigned to the mobile station (MS);
- that the selected direction finders (DFS) subsequently communicate the result of their direction finding (direction response), such as directional or azimuthal angle, direction quality, etc., to the network equipment, preferably the visitor register (VLR), and thereafter end the direction-finding procedure; and
- that the network equipment, preferably the visitor register (VLR), breaks off the connection to the sought mobile station (MS) and communicates to the location centre (LPC) the results of the locating (location response), such as cell number, distance from the base station (BTS), directional or azimuthal angle, direction quality, etc., in which location centre (LPC) the instantaneous location of the sought mobile station (MS) is ascertained from these results.

8. Method according to one of claims 3 to 7, characterised thereby that for determination of location within a cell the results of the at least one transit time measurement and the at least one cross-bearing process are combined with one another.

9. Method according to one of claims 3 to 8, characterised thereby that during a direction finding process of the direction finder or finders (DFS) several direction findings are carried out one after the other.

10. Method according to one of claims 3 to 9, characterised thereby that for the establishing of the cell number (cell identity) in which the sought mobile station (MS) is instantaneously disposed the network equipment, preferably the visitor register (VLR), after receipt of the answer (paging response) of the mobile station (MS) to the search cell (paging) of the network equipment, preferably the visitor register (VLR), directs a corresponding request (cell identity request) to the base station control (BSC) in question and this (BSC) ascertains the cell number (cell identity) and communicates it in its answer (cell identity response) to the visitor register (VLR).

11. Method according to one of claims 3 to 10, characterised thereby that the location centre (LPC) gives location requests either directly to the network equipment, preferably the authorised visitor register (VLR), insofar as this (VLR) is already known to the location centre (LPC) or indirectly by way of the home register (HLR) of the sought mobile station (MS).

12. Method according to one of the preceding claims, characterised thereby that for determination of the location of the mobile station (MS) several determinations of location are carried out one after the other in time.

13. Method according to one of the preceding claims, characterised thereby that for increase in the precision and/or unambiguity of the location result, location diversity is used and/or measurements on different frequencies (for example, in the form of frequency hopping) are carried out.

14. Cellularly built-up mobile radio network for carrying out the method according to one of the preceding claims, with several spatially distributed stationary base stations (BTS) each associated with one or more cells and at least one mobile station (MS) as well as with at least one storage device (HLR, VLR), which contains information about the identity of the at least one mobile station (MS) as well as about the cells or the cell groups in which the at least one mobile station (MS) was last reported, characterised thereby that individual base stations (BTS) or at least a part of these base stations (BTS) or groups of base stations (BTS) are or is respectively connected with at least one direction finder (DFS) associated therewith and that the mobile radio network comprises at least one location centre (LPC) connected with the direction finder or finders (DFS).

15. Mobile radio network according to claim 14, characterised thereby that the individual base stations (BTS) or base station groups are respectively connected with the direction finders (DFS), which are associated therewith, by way of a radio or wired connection.

16. Mobile radio network according to claim 15, characterised thereby that the individual direction finders (DFS) are equipped with devices (MS-DFS), which are required for a radio connection to the base station (BTS) respectively associated therewith, of a mobile station and that the radio connections to the base stations (BTS) respectively associated therewith are respectively produced by way of these devices (MS-DFS).

17. Mobile radio network according to one of claims 14 to 16, with at least one operating centre, characterised thereby that the location centre (LPC) is integrated into the or one of the operating and servicing centre or centres (OMC) of the network.

18. Mobile radio network according to one of claims 14 to 17, characterised thereby that the individual base stations (BTS) have location diversity devices available in the reception and/or that frequency change, for example, frequency hopping, is possible in the network.

19. Mobile radio network according to one of claims 14 to 18, characterised thereby that it is built up in accordance with the ETSI-GSM standard.

## Revendications

1. Procédé de localisation de stations mobiles (MS) dans un réseau de radiotéléphonie mobile de structure cellulaire, comportant plusieurs stations de base fixes (BTS) réparties dans l'espace et associées chacune à une ou plusieurs cellules et au moins une station mobile (MS), réseau qui présente au moins un dispositif de mémorisation (HLR / registre de rattachement des abonnés, VLR / registre des positions des visiteurs) qui contient des informations concernant l'identité de la station mobile (MS), dont il y a eu moins une, ainsi que concernant la cellule, ou le groupe de cellules, dans laquelle, ou dans lequel, la station mobile (MS), dont il y a au moins une, a été annoncée en dernier lieu, caractérisé par le fait que les informations du dispositif de mémorisation (HLR / VLR) sont employées pour la localisation grossière de la station mobile (MS) à localiser et que pour la localisation plus précise on effectue au moins un relèvement.

2. Procédé selon la revendication 1, caractérisé par le fait que la localisation de la station mobile (MS) à localiser est effectuée à différents étages de précision et que les étages de précision sont choisis de façon que la surface à l'intérieur de laquelle se situe la position de la station mobile (MS) à localiser soit la zone de l'opérateur de réseau ou une zone partielle de cette zone ou un groupe de cellules voisines ou une cellule isolée ou une zone partielle d'une telle cellule.

3. Procédé selon l'une des revendications 1 ou 2, caractérisé par le fait que pour la localisation à l'intérieur d'une cellule, sont déterminés la distance entre la station mobile (MS) à localiser et au moins une station de base (BTS) au moyen d'au moins une mesure du temps de propagation, ainsi que l'angle d'azimut au moyen du relèvement dont il y a au moins un.

4. Procédé selon la revendication 3, qui est employé dans un réseau de radiotéléphonie mobile de structure cellulaire et de préférence conçu selon la norme ETSI-GSM / Institut Européen des Normes de Télécommunication - Groupe-Speciale-Mobile, qui présente au moins une centrale de traitement de la localisation (LPC), au moins un registre de rattachement des abonnés (HLR), au moins un registre des positions des visiteurs (BSC) et au moins une station de relèvement (DFS), caractérisé par le fait :
- que la centrale de traitement de la localisation (LPC) détermine la nécessité d'une localisation pour une station mobile (MS) déterminée et détermine à la suite le registre des positions des visiteurs (VLR) dans lequel la station mobile (MS) à localiser est momentanément saisie et charge un dispositif approprié du réseau, de préférence ce registre des positions des visiteurs (VLR), directement ou par l'intermédiaire du registre de rattachement des abonnés (HLR) de la station mobile (MS) recherchée, de la localisation de la station mobile (MS) recherchée (location request / demande de position) ;
- que le dispositif de réseau, de préférence le registre des positions des visiteurs (VLR) appelle la station mobile (MS) recherchée par l'intermédiaire des stations de base (BTS) (paging / recherche de la station) ;
- que la station mobile (MS) appelée s'annonce dans sa cellule, dans laquelle elle se trouve momentanément, par une procédure d'annonce prescrite (RR-connection-procedure / procédure de liaison par radio) ;
- que la station mobile (MS) répond ensuite à l'appel de recherche (paging / appel de recherche de la station) du dispositif du réseau, de préférence du registre des positions des visiteurs (VLR) (paging response / réponse à l'appel de recherche de la station) et que cette réponse (paging response / réponse à l'appel de recherche de la station) parvient jusqu'au dispositif du réseau, de préférence jusqu'au registre des positions des visiteurs (VLR) ;
- que le dispositif du réseau, de préférence le registre des positions des visiteurs (VLR) envoie ensuite au poste de commande de la station de base (BSC) une demande de mesure de la distance (distance request / demande de mesure de la distance) ;
- que le dispositif du réseau, de préférence le poste de commande de la station de base (BSC) communique dans sa réponse (distance request / demande de mesure de la distance) au dispositif de réseau, de préférence au registre des positions des visiteurs (VLR) les données suivantes : a) indication concernant la cellule dans laquelle se trouve momentanément la station mobile (MS) (cell identity / identité de la cellule), pour la localisation et pour choisir une station de relèvement (DFS) appropriée pour le relèvement, b) des données du canal radio qui a été attribué à la station mobile (MS) recherchée, c) la valeur du décalage chronométrique (timing advance / avance chronométrique) dont la station mobile (MS) doit retarder l'émission de ses annonces du fait de sa distance à la station de base (BTS), afin que ces annonces puissent être reçues par la station de base (BTS) dans les intervalles de temps respectivement associés à cette station mobile (MS) ;
- que le dispositif du réseau, de préférence le registre des positions des visiteurs (VLR) choisit, en fonction de la cellule déterminée (cell identity / identité de la cellule), la station de relèvement (DFS) convenant pour le relèvement et qu'est ensuite envoyée à cette station de relèvement (DFS), une demande de relèvement (direction cmd / commande de recherche de la direction) de la station mobile (MS) recherchée, demande dans laquelle sont contenues les données du canal radio attribué à la station mobile (MS) ;
- que la station de relèvement (DFS) choisie exécute ensuite, dans le canal radio attribué à la station mobile (MS), le relèvement, dont il y a au moins un, de la station mobile (MS), éventuellement constitué de plusieurs relèvements individuels successifs dans le temps (direction measurement / mesure de la direction) ;
- que la station de relèvement (DFS) transmet ensuite le résultat du relèvement comme angle de direction ou angle d'azimut, qualité du relèvement, etc., au dispositif du réseau, de préférence au registre des positions des visiteurs (VLR) (direction response / réponse à la demande de mesure de la direction) et met ensuite fin au processus de relèvement ;
- que le dispositif du réseau, de préférence le registre des positions des visiteurs (VLR) annule la liaison avec la station mobile (MS) recherchée et transmet (location response / réponse à la demande de position) les résultats de la localisation comme numéro de cellule, distance de la station de base (BTS), angle de direction ou angle d'azimut, qualité du relèvement, etc., à la centrale de traitement de la localisation (LPC) dans laquelle, à partir de ces résultats, est déterminée la position momentanée de la station mobile (MS) recherchée.

5. Procédé selon l'une des revendications 3 ou 4, caractérisé par le fait que, dans le cas où le déroulement de la demande de localisation par l'intermédiaire de la station de base (BTS) choisie ne donne aucun résultat de localisation, ou aucun résultat clair, ensuite, par l'intermédiaire d'au moins une autre station de base (BTS) se déroule au moins une autre mesure du temps de propagation et/ou au moins un autre relèvement.

6. Procédé selon l'une des revendications 1 ou 2, caractérisé par le fait que pour la localisation à l'intérieur d'une cellule, au moins un relèvement en croix est effectué.

7. Procédé selon la revendication 6, qui est employé dans un réseau de radiotéléphonie mobile de structure cellulaire et de préférence conçu selon la norme ETSI-GSM / Institut Européen des Normes de Télécommunication - Groupe-Speciale-Mobile, qui présente au moins une centrale de traitement de la localisation (LPC), au moins un registre de rattachement des abonnés (HLR), au moins un registre des positions des visiteurs (BSC) et au moins deux stations de relèvement (DFS), caractérisé par le fait :
- que la centrale de traitement de la localisation (LPC) détermine la nécessité d'une localisation pour une station mobile (MS) déterminée et détermine à la suite le registre des positions des visiteurs (VLR) dans lequel la station mobile (MS) à localiser est momentanément saisie et charge un dispositif approprié du réseau, de préférence ce registre des positions des visiteurs (VLR), directement ou par l'intermédiaire du registre de rattachement des abonnés (HLR) de la station mobile (MS) recherchée, de la localisation de la station mobile (MS) recherchée (location request / demande de position) ;
- que le dispositif de réseau, de préférence le registre des positions des visiteurs (VLR) appelle la station mobile (MS) recherchée par l'intermédiaire des stations de base (BTS) (paging / recherche de la station) ;
- que la station mobile (MS) appelée s'annonce dans sa cellule, dans laquelle elle se trouve momentanément, par une procédure d'annonce prescrite (RR-connection-procedure / procédure de liaison par radio) ;
- que la station mobile (MS) répond ensuite à l'appel de recherche (paging / appel de recherche de la station) du dispositif du réseau, de préférence du registre des positions des visiteurs (VLR) (paging response / réponse à l'appel de recherche de la station) et que cette réponse (paging response / réponse à l'appel de recherche de la station) parvient jusqu'au dispositif du réseau, de préférence jusqu'au registre des positions des visiteurs (VLR) ;
- que le dispositif du réseau, de préférence le registre des positions des visiteurs (VLR) envoie ensuite au poste de commande de la station de base (BSC) une demande de mesure de la distance (distance request / demande de mesure de la distance) ;
- que le poste de commande de la station de base (BSC) communique dans sa réponse (distance request / demande de mesure de la distance) au dispositif de réseau, de préférence au registre des positions des visiteurs (VLR) les données suivantes : a) indication concernant la cellule dans laquelle se trouve momentanément la station mobile (MS) (cell identity / identité de la cellule), pour la localisation et pour choisir au moins deux stations de relèvement (DFS) appropriées pour le relèvement, b) des données du canal radio qui a été attribué à la station mobile (MS) recherchée, c) la valeur du décalage chronométrique (timing advance / avance chronométrique) dont la station mobile (MS) doit retarder l'émission de ses annonces du fait de sa distance à la station de base (BTS), afin que ces annonces puissent être reçues par la station de base (BTS) dans les intervalles de temps respectivement associés à cette station mobile (MS), ainsi que d) des informations concernant les cellules voisines (neighbour cell information / information concernant les cellules voisines) pour pouvoir choisir au moins deux stations de relèvement (DFS) appropriées pour le relèvement en croix ;
- que le dispositif du réseau, de préférence le registre des positions des visiteurs (VLR) choisit en fonction de la cellule déterminée (cell identity / identité de la cellule) et des informations concernant les cellules voisines (neighbour cell information / information concernant les cellules voisines) au moins deux stations de relèvement (DFS) appropriées pour le relèvement en croix et qu'est ensuite envoyée à ces stations de relèvement (DFS) une demande de relèvement (direction command / commande de mesure de la direction) de la station mobile (MS) recherchée, demande dans laquelle sont contenues les données du canal radio attribué à la station mobile (MS) ;
- que les stations de relèvement (DFS) choisies exécutent ensuite, en parallèle, dans le canal radio attribué à la station mobile (MS), le relèvement, dont il y a au moins un, de la station mobile (MS) éventuellement constitué de plusieurs relèvements individuels successifs dans le temps (direction measurement / mesure de la direction) ;
- que les stations de relèvement (DFS) choisies transmettent ensuite au dispositif du réseau, de préférence au registre des positions des visiteurs (VLR), le résultat de leur relèvement comme angle de direction ou angle d'azimut, qualité du relèvement, etc. (direction response / réponse à la demande de mesure de la direction) et mettent ensuite fin au processus de relèvement ;
- que le dispositif du réseau, de préférence le registre des positions des visiteurs (VLR) annule la liaison avec la station mobile (MS) recherchée et communique les résultats de la localisation (comme numéro de cellule, angle de direction, qualité du relèvement, etc.), à la centrale de traitement de la localisation (LPC) (location response / réponse à la demande de position) dans laquelle, à partir de ces résultats, est déterminée la position momentané de la station mobile (MS) recherchée.

8. Procédé selon l'une des revendications 3 à 7, caractérisé par le fait que pour la localisation à l'intérieur d'une cellule, les résultats de la mesure, dont il y a au moins une, du temps de propagation et du relèvement en croix dont il y a au moins un, sont combinés ensemble.

9. Procédé selon l'une des revendications 3 à 8, caractérisé par le fait que pendant un processus de relèvement par la station de relèvement ou par les stations de relèvement (DFS), plusieurs relèvements sont effectués successivement.

10. Procédé selon l'une des revendications 3 à 9, caractérisé par le fait que pour déterminer le numéro de cellule (cell identity / identité de la cellule), dans laquelle la station mobile (MS) recherchée se trouve momentanément, après réception de la réponse (paging response / réponse à l'appel) de la station mobile (MS) à l'appel (paging) du dispositif du réseau, de préférence du registre des positions des visiteurs (VLR), le dispositif du réseau, de préférence le registre des positions des visiteurs, envoie une demande appropriée (cell identity / identité de la cellule) au poste de commande de la station de base (BSC) qui vient en question et que celui-ci (BSC) détermine le numéro de cellule (cell identity / identité de la cellule) et communique sa réponse (cell identity response / réponse à la demande d'identité de la cellule) au registre des positions des visiteurs (VLR).

11. Procédé selon l'une des revendications 3 à 10, caractérisé par le fait que la centrale de traitement de la localisation (LPC) envoie des demandes de localisation soit directement au réseau, de préférence au registre des positions des visiteurs (VLR) compétent, dans la mesure où ce registre des positions des visiteurs (VLR) est déjà connu de la centrale de traitement de la localisation (LPC), soit indirectement par l'intermédiaire du registre de rattachement des abonnés (HLR) de la station mobile (MS) recherchée.

12. Procédé selon l'une des revendications précédentes, caractérisé par le fait que pour le suivi de la localisation de la station mobile (MS), plusieurs localisations sont effectuées successivement dans le temps.

13. Procédé selon l'une des revendications précédentes, caractérisé par le fait que pour augmenter la précision et/ou la non-ambiguïté du résultat de la localisation, on utilise la diversité des positions et/ou on exécute des mesures à différentes fréquences par exemple (sous forme de l'emploi de sauts de fréquence).

14. Réseau de radiotéléphonie mobile de structure cellulaire pour la mise en oeuvre du procédé selon l'une des revendications précédentes, comportant plusieurs stations de base fixes (BTS) réparties dans l'espace et associées chacune à une ou plusieurs cellules et au moins une station mobile (MS), ainsi qu'au moins un dispositif de mémorisation (HLR / registre de rattachement des abonnés, VLR / registre des positions des visiteurs) qui contient des informations concernant l'identité de la station mobile (MS), dont il y a eu moins une, ainsi que concernant la cellule, ou le groupe de cellules, dans laquelle, ou dans lequel, la station mobile (MS), dont il y a au moins une, a été annoncée en dernier lieu, caractérisé par le fait que les différentes stations de base (BTS) ou tout au moins une partie de ces stations de base (BTS) ou des groupes de stations de base (BTS) sont chacune en liaison avec au moins une station de relèvement (DFS) qui leur est associée et que le réseau de radiotéléphonie mobile présente au moins une centrale de traitement de la localisation (LPC) qui est en liaison avec la station de relèvement ou les stations de relèvement (DFS).

15. Réseau de radiotéléphonie mobile selon la revendication 14, caractérisé par le fait que les différentes stations de base (BTS) ou groupes de stations de base sont chacune, ou chacun, reliées, ou reliés, aux stations de relèvement (DFS) qui leur sont associées par l'intermédiaire d'une liaison radio ou d'une liaison par ligne.

16. Réseau de radiotéléphonie mobile selon la revendication 15, caractérisé par le fait que les différentes stations de relèvement (DFS) sont équipées avec les appareils (MS-DFS / station mobile - station de relèvement) d'une station mobile nécessaire pour une liaison radio avec la station de base (BTS) qui leur est respectivement associée et que les liaisons radio avec les stations de base (BTS) qui leur sont respectivement associées sont chaque fois réalisées par l'intermédiaire de ces appareils (MS-DFS).

17. Réseau de radiotéléphonie mobile selon l'une des revendications 14 à 16, comportant au moins une centrale d'exploitation et de maintenance, caractérisé par le fait que la centrale de traitement de la localisation (LPC) est intégrée dans la centrale d'exploitation et de maintenance (OMC) du réseau ou dans l'une de ces centrales du réseau.

18. Réseau de radiotéléphonie mobile selon l'une des revendications 14 à 17, caractérisé par le fait que les différentes stations de base (BTS) disposent, en réception, de dispositifs de diversité de positions et/ou que, dans le réseau, un changement de fréquence, ou des changements de fréquence, par exemple un saut de fréquence ou des sauts de fréquence est possible (sont possibles).

19. Réseau de radiotéléphonie mobile selon l'une des revendications 14 à 18, caractérisé par le fait qu'il est réalisé selon la norme ETSI-GSM / Institut Européen des Normes de Télécommunication - Groupe-Speciale-Mobile.
